(19) Europäisches Patentamt
European Patent Office
Office européen des brevets

(11) **EP 4 206 911 B1**

(12) **EUROPEAN PATENT SPECIFICATION**

(45) Date of publication and mention
of the grant of the patent:
**25.03.2026   Bulletin 2026/13**

(21) Application number: **21871311.3**

(22) Date of filing: **13.09.2021**

(51) International Patent Classification (IPC):
*G06F 9/451* *(2018.01)*      *G06F 9/445* *(2018.01)*
*G06F 3/0481* *(2022.01)*      *G06F 3/147* *(2006.01)*

(52) Cooperative Patent Classification (CPC):
**G06F 3/147; G06F 3/0481; G06F 9/44505;
G06F 9/451;** G09G 2354/00; G09G 2370/042

(86) International application number:
**PCT/CN2021/118009**

(87) International publication number:
**WO 2022/062940 (31.03.2022 Gazette 2022/13)**

(54) **ICON DATA MIGRATION METHOD, ELECTRONIC DEVICE AND COMPUTER READABLE STORAGE MEDIUM**

SYMBOLDATENMIGRATIONSVERFAHREN, ELEKTRONISCHE VORRICHTUNG UND COMPUTERLESBARES SPEICHERMEDIUM

PROCÉDÉ DE MIGRATION DE DONNÉES D'ICÔNE, DISPOSITIF ÉLECTRONIQUE ET SUPPORT D'ENREGISTREMENT LISIBLE PAR ORDINATEUR

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority:  **22.09.2020   CN 202011002130**

(43) Date of publication of application:
**05.07.2023   Bulletin 2023/27**

(73) Proprietor: **Huawei Technologies Co., Ltd.
Shenzhen, Guangdong 518129 (CN)**

(72) Inventor: **XU, Bowen
Shenzhen, Guangdong 518129 (CN)**

(74) Representative: **Körber, Martin Hans et al
Mitscherlich PartmbB
Karlstraße 7
80333 München (DE)**

(56) References cited:
**CN-A- 103 530 096      CN-A- 107 566 502
CN-A- 107 632 872      CN-A- 109 857 355
US-A1- 2013 339 833      US-A1- 2014 203 999
US-B2- 8 161 390**

**Description**

**TECHNICAL FIELD**

This application relates to the field of intelligent terminal technologies, and in particular, to an icon data migration method, an electronic device, and a computer-readable storage medium.

**BACKGROUND**

With development of intelligent terminals, screens of intelligent terminals also appear in various forms. For example, a mobile phone with a foldable screen is used as an example. The mobile phone with a foldable screen has two screens of different sizes, which are applied to different use scenarios of a user. However, currently, device types of mainstream intelligent terminals are all single-screen devices. Therefore, in a related technology, icon data of an old device is migrated to a new device by using data migration software.

In the related technology, only migration from a single-screen device to a single-screen device is considered. Therefore, when icon data is migrated from a single-screen device to a multi-screen device, because quantities of screens of the two devices are inconsistent, an icon layout cannot be correctly retained on an outer screen of the multi-screen device based on a user expectation, and a problem that desktop icons on the outer screen of the multi-screen device are irregularly scattered is caused. Further, when icon data is migrated from a multi-screen device to a single-screen device, a problem that to-be-migrated icon data expected by a user is inconsistent with actually migrated icon data is caused. In addition, when icon data is migrated from a single-screen device to a multi-screen device, a problem that migrated icon data is incomplete or missing is caused. US 2014/203999 AI describes a method for displaying pages on devices with different screen sizes and handling content based on user gestures. US 2013/339833 A1 discloses layout synchronization between devices with different display properties to maintain a consistent appearance.

**SUMMARY**

In view of this, this application provides an icon data migration method, an electronic device, and a computer-readable storage medium. In this way, icon data migration between migration devices of different device types and to-be-migrated devices of different device types can be implemented, so that a use habit of a user and icon data are retained to a maximum extent, and it is more convenient for the user to organize and manage desktop icons, thereby improving use convenience for the user. The application is set out in the appended set of claims.

According to one aspect, an embodiment of this application provides an icon data migration method, according to claim 1.

In a possible implementation, f the device type of the migration device comprises a single-screen device and the device type of the to-be-migrated device comprises a multi-screen device, or if the device type of the migration device comprises a multi-screen device and the device type of the to-be-migrated device comprises a single-screen device, the calculating actual icon data based on the reference icon data and an obtained icon layout of the first display screen includes:

determining an icon layout of a specified display screen of the migration device based on the reference icon data;
determining whether an icon layout of each first display screen is the same as the icon layout of the specified display screen, and
if it is determined that the icon layout of the first display screen is the same as the icon layout of the specified display screen, using the reference icon data of the specified display screen as the actual icon data of the first display screen; or
if it is determined that the icon layout of the first display screen is different from the icon layout of the specified display screen, determining the actual icon data of the first display screen by using an icon mapping algorithm and based on the reference icon data and the icon layout of the first display screen.

In a possible implementation, the icon layout of the first display interface includes a second quantity of icon columns; and
the determining the actual icon data of the first display screen by using an icon mapping algorithm and based on the reference icon data and the icon layout of the first display screen includes:

determining a first quantity of icon columns of the specified display screen from the icon layout of the specified display screen;
calculating coordinates of each icon in the icon layout of the first display screen by using the icon mapping algorithm and based on the first quantity of icon columns, the second quantity of icon columns, and obtained coordinates of each icon in the icon layout of the specified display screen; and

using a set of the coordinates of each icon as the actual icon data of the first display screen, to determine actual icon data of at least one first display screen.

In a possible implementation, the second quantity of icon columns includes N columns, and the first quantity of icon columns includes J columns; and
the calculating coordinates of each icon in the icon layout of the first display screen by using the icon mapping algorithm and based on the first quantity of icon columns, the second quantity of icon columns, and obtained coordinates of each icon in the icon layout of the specified display screen includes:

by using an icon mapping algorithm formula:

$$Y' = \big((Y * J) + X\big) \ \% \ N$$

$$X' = \big((Y * J) + X\big) - (Y' * N)$$

calculating coordinates of each icon in the icon layout of each first display screen, where X represents an X-axis coordinate value of an icon in the icon layout of the specified display screen, Y represents a Y-axis coordinate value of the icon in the icon layout of the specified display screen, X' represents an X-axis coordinate value of the icon in the icon layout of the first display screen, and Y' represents a Y-axis coordinate value of the icon in the icon layout of the first display screen.

In a possible implementation, the calculating actual icon data based on the reference icon data and an obtained icon layout of the first display screen includes:

displaying prompt information on each first display screen, where the prompt information is used to prompt a user to select, from the plurality of pieces of reference icon data, reference icon data that needs to be migrated;
for each first display screen, receiving a selection operation of the user, and determining an icon layout of a specified display screen corresponding to the reference icon data selected by the user;
determining whether an icon layout of each first display screen is the same as the icon layout of the specified display screen; and
if it is determined that the icon layout of the first display screen is the same as the icon layout of the specified display screen, using the reference icon data of the specified display screen as the actual icon data of the first display screen;
or
if it is determined that the icon layout of the first display screen is different from the icon layout of the specified display screen, determining the actual icon data of the first display screen by using an icon mapping algorithm and based on the reference icon data selected by the user and the icon layout of the first display screen.

In a possible implementation, the icon layout of the first display interface includes a second quantity of icon columns; and
the determining the actual icon data of the first display screen by using an icon mapping algorithm and based on the reference icon data selected by the user and the icon layout of the first display screen includes:

determining a first quantity of icon columns of the specified display screen based on the icon layout of the specified display screen corresponding to the reference icon data selected by the user;
calculating coordinates of each icon in the icon layout of the first display screen by using the icon mapping algorithm and based on the first quantity of icon columns, the second quantity of icon columns, and obtained coordinates of each icon in the icon layout of the specified display screen; and
using a set of the coordinates of each icon as the actual icon data of the first display screen, to determine actual icon data of a plurality of first display screens.

According to a second aspect, an embodiment of this application provides an electronic device, including a display, one or more processors, a memory, a plurality of applications, and one or more computer program: according to claim 7.
According to a third aspect, an embodiment of this application provides a computer-readable storage according to claim 8.

In the technical solutions provided in the embodiments of this application, the link establishment request sent by the migration device is obtained, where the link establishment request carries the device type of the migration device, and the device type includes a single-screen device or a multi-screen device. The reference icon data of the migration device is obtained based on the device type of the migration device and the device type of the to-be-migrated device after the link is successfully established. The actual icon data is calculated based on the reference icon data and the obtained icon layout of the first display screen. The icon corresponding to the actual icon data is displayed based on the icon layout. In this way, icon data migration between migration devices of different device types and to-be-migrated devices of different device types can be implemented, so that a use habit of the user and icon data are retained to a maximum extent, and it is more convenient for the user to organize and manage desktop icons, thereby improving convenience of using the icons by the user.

## BRIEF DESCRIPTION OF DRAWINGS

FIG. 1 is a diagram of an architecture of an icon data migration system according to an embodiment of this application;

FIG. 2 is a structural diagram of an apparatus of a migration device 110 or a to-be-migrated device 120 according to an embodiment of this application;

FIG. 3 is a flowchart of an icon data migration method according to an embodiment of this application;

FIG. 4 is a schematic diagram of an effect of displaying prompt information according to an embodiment of this application;

FIG. 5 is a schematic diagram of an icon layout of a migration device 110 according to an embodiment of this application;

FIG. 6a is a schematic diagram of an icon layout of an inner display screen of a to-be-migrated device 120 according to an embodiment of this application;

FIG. 6b is a schematic diagram of an icon layout of an outer display screen of a to-be-migrated device 120 according to an embodiment of this application;

FIG. 7a is a schematic diagram of another icon layout of a migration device 110 according to an embodiment of this application;

FIG. 7b is a schematic diagram of another icon layout of a to-be-migrated device 120 according to an embodiment of this application;

FIG. 8a is a schematic diagram of an icon layout of a specified display screen of a migration device 110 according to an embodiment of this application;

FIG. 8b is a schematic diagram of an icon layout of a first display screen of a to-be-migrated device 120 according to an embodiment of this application;

FIG. 8c is a schematic diagram of another icon layout of a specified display screen of a migration device 110 according to an embodiment of this application;

FIG. 8d is a schematic diagram of another icon layout of a first display screen of a to-be-migrated device 120 according to an embodiment of this application;

FIG. 9a is a schematic diagram of another icon layout of a specified display screen of a migration device 110 according to an embodiment of this application;

FIG. 9b is a schematic diagram of another icon layout of a first display screen of a to-be-migrated device 120 according to an embodiment of this application;

FIG. 10 is a schematic diagram of establishing a coordinate system according to an embodiment of this application;

FIG. 11a is a schematic diagram of another icon layout of a specified display screen of a migration device 110 according to an embodiment of this application;

FIG. 11b is a schematic diagram of another icon layout of a first display screen of a to-be-migrated device 120 according to an embodiment of this application;

FIG. 12a is a schematic diagram of an effect of displaying an icon by a to-be-migrated device 120 according to an embodiment of this application;

FIG. 12b is a schematic diagram of another effect of displaying an icon by a to-be-migrated device 120 according to an embodiment of this application;

FIG. 13 is a schematic diagram of another effect of displaying an icon by a to-be-migrated device 120 according to an embodiment of this application;

FIG. 14 is a flowchart of another icon data migration method according to an embodiment of this application;

FIG. 15 is a schematic diagram of another effect of displaying prompt information according to an embodiment of this application;

FIG. 16 is a schematic diagram of another icon layout of a specified display screen of a migration device 110 according to an embodiment of this application;

FIG. 17a is a schematic diagram of another icon layout of a specified display screen of a migration device 110 according to an embodiment of this application;

FIG. 17b is a schematic diagram of another icon layout of a specified display screen of a migration device 110 according to an embodiment of this application;

FIG. 18a is a schematic diagram of another effect of displaying an icon by a to-be-migrated device 120 according to an embodiment of this application;

FIG. 18b is a schematic diagram of another effect of displaying an icon by a to-be-migrated device 120 according to an embodiment of this application;

FIG. 19 is a schematic block diagram of an electronic device according to an embodiment of this application; and

FIG. 20 is a schematic diagram of a structure of an electronic device according to an embodiment of this application.

## DESCRIPTION OF EMBODIMENTS

To make technical solutions in this application more comprehensible, the following describes embodiments of this application in detail with reference to accompanying drawings.

It should be clear that the described embodiments are merely some but not all of embodiments of this application. All other embodiments obtained by a person of ordinary skill in the art based on embodiments of this application without creative efforts shall fall within the protection scope of this application.

The terms used in embodiments of this application are merely for the purpose of illustrating specific embodiments, and are not intended to limit this application. The terms "a", "said", and "the" of singular forms used in embodiments and the appended claims of this application are also intended to include plural forms, unless otherwise specified in the context clearly.

It should be understood that the term "and/or" used in this specification merely describes an association relationship between associated objects, and indicates that there may be three relationships. For example, A and/or B may indicate three cases: There is only A, there are both A and B, and there is only B. In addition, the character "/" in this specification generally indicates an "or" relationship between associated objects.

Before an icon data migration method provided in the embodiments of this application is described, an icon data migration method in a related technology is first briefly described.

As a degree of dependence of users on intelligent terminals increases with each passing day, there are increasingly more different types of applications (Application, APP for short). Due to life and work requirements, a quantity of APPs installed and used by users also shows a trend of substantial growth. As increasingly more APPs are installed on an intelligent terminal, when a user replaces the intelligent terminal or uses a new intelligent terminal, the user usually does not choose to re-download these APPs on the new intelligent terminal, but migrates icon data of the old device to the new device, to reduce a time consumed for installing the applications.

Currently, screens of mainstream intelligent terminals are all in a single-screen form. Therefore, in a related technology, icon data of an old device can usually be successfully migrated to a new device by using data migration software. However, with development of intelligent terminals, screens of intelligent terminals also appear in various forms. A mobile phone with a foldable screen is used as an example. Two screens of different sizes appear on the mobile phone with a foldable screen, and are applied to different use scenarios of a user. In addition to the mobile phone with a foldable screen, another multi-screen device may be further included. For such multi-screen devices, if the data migration software in the related technology is used to migrate icon data of a single-screen device to a multi-screen device, because quantities of screens of the two devices are inconsistent, an icon layout cannot be correctly retained on some screens of the multi-screen device based on a user expectation, and a problem that desktop icons on the some screens of the multi-screen device are irregularly scattered is caused.

Further, for such multi-screen devices, if the data migration software in the related technology is used to migrate icon data of a multi-screen device to a single-screen device, because quantities of screens are different, a problem that to-be-migrated icon data expected by a user is inconsistent with actually migrated icon data occurs. In addition, if the data migration software in the related technology is used to migrate icon data of a multi-screen device to a multi-screen device, because screen forms are different, a problem that migrated icon data is incomplete or missing is caused.

Based on this, a technical problem to be resolved in this application is how to resolve problems of scattered icons, unsatisfactory migrated data, and incomplete icon data caused by different screen forms or screen quantities during data migration between a multi-screen device and a single-screen device and between multi-screen devices. Therefore, the embodiments of this application provide an icon data migration method, to resolve a data migration problem existing in the related technology, and reduce cumbersome synchronization operations of a user.

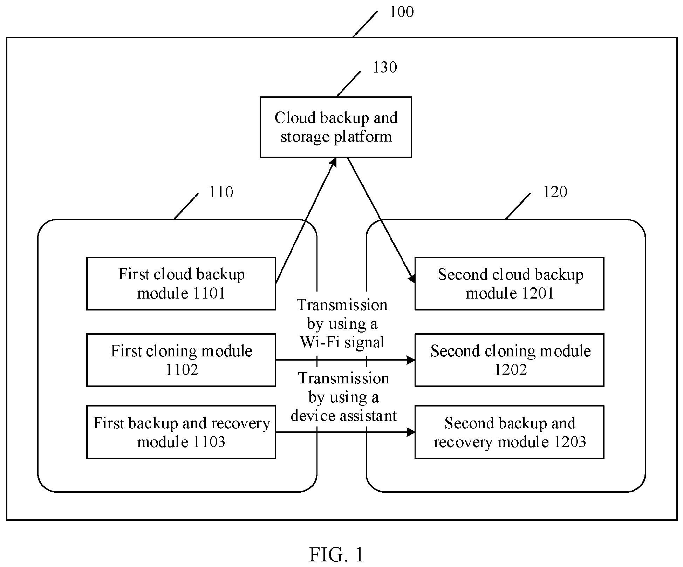

FIG. 1 is a diagram of an architecture of an icon data migration system according to an embodiment of this application. As shown in FIG. 1, the system 100 includes a migration device 110, a to-be-migrated device 120, and a cloud backup and storage platform 130. The migration device 110 includes a device that migrates icon data to another device.

The to-be-migrated device 120 includes a device that receives icon data sent by the migration device 110.

It should be noted that the migration device 110 and the to-be-migrated device 120 may be terminal devices, such as a mobile phone terminal, a tablet computer, a notebook computer, an augmented reality (augmented reality, AR for short)/virtual reality (virtual reality, VR for short) terminal, or a vehicle-mounted terminal; or may be servers, clouds, or the like. In addition, the migration device 110 and the to-be-migrated device 120 may alternatively be computing devices, such as a desktop computer, a laptop computer, a handheld computer, a cellular phone, a dedicated media player, or a consumer electronic device.

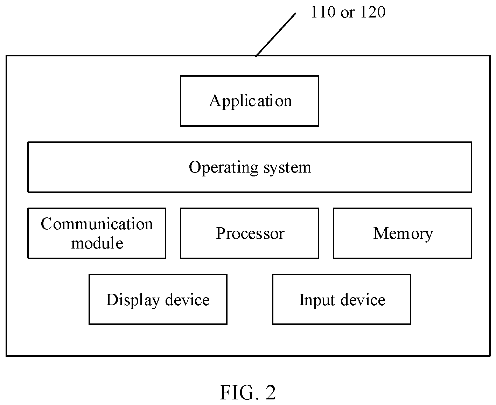

In addition, the migration device 110 and the to-be-migrated device 120 may alternatively be other types of devices, and all devices that meet a specified apparatus structure may be used as the migration device 110 and the to-be-migrated device 120. The following briefly describes an apparatus of the migration device 110 or the to-be-migrated device 120. FIG. 2 is a structural diagram of an apparatus of a migration device 110 or a to-be-migrated device 120 according to an embodiment of this application. The apparatus of the migration device 110 may include an application module, an operating system, a processor, a communication module, a memory, a display device, and an input device. The apparatus of the to-be-migrated device 120 may include an application module, an operating system, a processor, a communication module, a memory, a display device, and an input device.

The processor is configured to control receiving and manipulation of input and output data between components of a computer system. Specifically, the processor is configured to calculate a causal time and a display time, and perform a sorting calculation.

The communication module is configured to connect the terminal device to the Internet, and can perform data communication with a server deployed on the Internet. Data interaction between an application and the server is performed by using the communication module. Specifically, the communication module may be configured to interact with the server, to obtain a UTC time of the server, and transmit a chat record and receive a record.

The memory is configured to connect to the processor, and the memory is further configured to store information about the operating system, an application, and the like that are used by the terminal. The memory may include a read-only memory (ROM), a random access memory (RAM), and the like. The information may alternatively reside on a removable storage medium and be loaded or installed on the computer system when needed. The removable storage medium includes an SD memory card. Specifically, the memory is configured to store a chat application and record a chat record, including but not limited to chat content, a causal time, a display time, and the like.

The display device is operatively connected to the processor, and the display device is configured to receive and display a processing result returned by the processor. Generally, the display device is configured with a graphical user interface (GUI), and the GUI includes an easy-to-use user interface provided between a user of the computer system and an operating system or an application running on the computer system. Specifically, the display device is configured to display a combined chat record and a time block based on a sorting result.

The input device is operatively connected to the processor. The input device of the terminal is configured to receive an input operation of a user, and may send content entered by the user to the server. The input device may be a touchpad or a touchscreen placed above or before the display device, and may be based on various sensing technologies, including but not limited to capacitance sensing, resistance sensing, surface acoustic wave sensing, pressure sensing, light sensing, and the like. The touchpad or the touchscreen may be integrated with the display device, or may be a separate component. The input device may be a single-point or multipoint input device. Specifically, the input device is configured to receive a chat input operation of the user.

That is, all terminal devices that meet the foregoing apparatus structure may be used as the migration device 110 or the to-be-migrated device 120 provided in this embodiment of this application. The following specifically describes the migration device 110 or the to-be-migrated device 120 provided in this embodiment of this application.

In this embodiment of this application, the migration device 110 includes a first cloud backup module 1101, a first cloning module 1102, and a first backup and recovery module 1103. The to-be-migrated device 120 includes a second cloud backup module 1201, a second cloning module 1202, and a second backup and recovery module 1203. Data transmission is performed between the first cloud backup module 1101 and the second cloud backup module 1201 by using the cloud backup and storage platform 130. Data transmission is performed between the first cloning module 1102 and the second cloning module 1202 by using a Wi-Fi signal. Data transmission is performed between the first backup and recovery module 1103 and the second backup and recovery module 1203 by using a device assistant. The device assistant includes moving software provided by the system, or moving software downloaded from another platform.

Specifically, icon data migration may be performed in the foregoing three data transmission manners.

In an optional solution, data transmission performed by using the cloud backup and storage platform 130 is used as an example. The to-be-migrated device 120 obtains a link establishment request sent by the migration device 110, where the link establishment request carries a device type of the migration device 110. After a link is successfully established, the migration device 110 and the to-be-migrated device 120 can mutually obtain device types of each other. Based on the device types of the migration device 110 and the to-be-migrated device 120, the migration device 110 uploads reference icon data to the cloud backup and storage platform 130 by using the first cloud backup module 1101. The reference icon data is sent to the to-be-migrated device 120 by using the cloud backup and storage platform 130, so that the to-be-migrated device 120 obtains the reference icon data of the migration device 110, and calculates actual icon data based on the reference icon data and an obtained icon layout of a first display screen, thereby completing migration of the icon data. After the icon data is migrated, an icon corresponding to the actual icon data is displayed.

In another optional solution, data transmission performed by using a Wi-Fi signal is used as an example. The to-be-migrated device 120 obtains a link establishment request sent by the migration device 110, where the link establishment request carries a device type of the migration device 110. After a link is successfully established, the migration device 110 and the to-be-migrated device 120 can mutually obtain device types of each other. Based on the device types of the migration device 110 and the to-be-migrated device 120, the migration device 110 sends, by using a Wi-Fi signal, reference icon data to the to-be-migrated device 120 by using the first cloning module 1102, so that the to-be-migrated device 120 obtains the reference icon data of the migration device 110, and calculates actual icon data based on the reference icon data and an obtained icon layout of a first display screen, thereby completing migration of the icon data. After the icon data is migrated, an icon corresponding to the actual icon data is displayed.

In another optional solution, data transmission performed by using a device assistant is used as an example. The to-be-migrated device 120 obtains a link establishment request sent by the migration device 110, where the link establishment request carries a device type of the migration device 110. After a link is successfully established, the migration device 110 and the to-be-migrated device 120 can mutually obtain device types of each other. Based on the device types of the migration device 110 and the to-be-migrated device 120, the migration device 110 sends, by using a device assistant, reference icon data to the to-be-migrated device 120 by using the first backup and recovery module 1103, so that the to-be-migrated device 120 obtains the reference icon data of the migration device 110, and calculates actual icon data based on the reference icon data and an obtained icon layout of a first display screen, thereby completing migration of the icon data. After the icon data is migrated, an icon corresponding to the actual icon data is displayed.

In this embodiment of this application, icon data migration between migration devices of different device types and to-be-migrated devices of different device types can be implemented by using the foregoing system architecture 100. Specifically, the following embodiments are used to respectively describe in detail a data migration process of migrating icon data from a multi-screen device to a single-screen device, a data migration process of migrating icon data from a single-screen device to a multi-screen device, and a data migration process of migrating icon data from a multi-screen device to a multi-screen device.

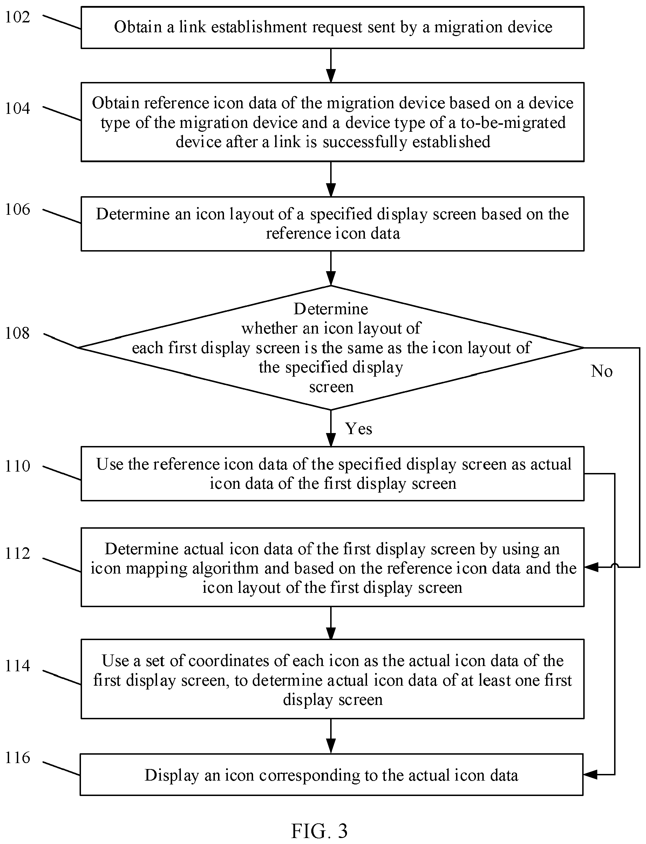

FIG. 3 is a flowchart of an icon data migration method according to an embodiment of this application. The method is applied to a to-be-migrated device. As shown in FIG. 3, the method includes the following steps.

Step 102: Obtain a link establishment request sent by a migration device.

In this embodiment of this application, each step is performed by the to-be-migrated device. By performing step 102, the to-be-migrated device obtains a device type of the migration device, thereby facilitating subsequent implementation of icon data migration between migration devices of different device types and to-be-migrated devices of different device types.

In this embodiment of this application, the link establishment request carries the device type of the migration device, and the device type includes a single-screen device or a multi-screen device. It should be noted that this embodiment of this application specifically describes a process of migrating icon data from a migration device whose device type includes a single-screen device to a to-be-migrated device whose device type includes a multi-screen device and from a migration device whose device type includes a multi-screen device to a to-be-migrated device whose device type includes a single-screen device. For a process of migrating icon data from a migration device whose device type includes a multi-screen device to a to-be-migrated device whose device type includes a multi-screen device, refer to the following embodiment.

Step 104: Obtain reference icon data of the migration device based on the device type of the migration device and a device type of the to-be-migrated device after a link is successfully established.

In this embodiment of this application, different processes are performed in step 104 based on different device types of the migration device and different device types of the to-be-migrated device, and specifically include:

If the device type of the migration device includes a single-screen device, and the device type of the to-be-migrated device includes a multi-screen device, obtaining all icon data sent by the migration device, and determining all the icon data as the reference icon data.

In this step, the multi-screen device includes a plurality of display screens, the single-screen device includes one display screen, and all the icon data may be understood as a sum of icon data corresponding to the display screen. Because the device type of the migration device includes a single-screen device, all the obtained icon data of the migration device is icon data of one display screen. In other words, when the device type of the migration device includes a single-screen device, icon data sent by the migration device is all icon data of the migration device.

If the device type of the migration device includes a multi-screen device, and the device type of the to-be-migrated device includes a single-screen device, obtaining partial icon data that is selected to be migrated, and determining the partial icon data as the reference icon data.

In this step, the multi-screen device includes a plurality of display screens, the single-screen device includes one display screen, and the partial icon data is used to indicate icon data corresponding to one specified display screen of the migration device.

Ir the embodiment of this application, the multi-screen device includes a plurality of display screens. For example, the multi-screen device may include two screens, and the two screens may include an inner screen and an outer screen. In addition, the multi-screen device may alternatively include another quantity of first display screens, and the icon data migration method provided in this embodiment of this application may be performed for different quantities of first display screens. In the embodiment of this application, the partial icon data is used to indicate icon data corresponding to one specified display screen of the migration device. That is, when the device type of the migration device includes a multi-screen device, each display screen of the migration device has different icon data. In this case, when the device type of the to-be-migrated device includes a single-screen device, icon data corresponding to one specified display screen may be selected from the migration device based on a selection operation of a user for sending. Therefore, obtained icon data is partial icon data that is selected to be migrated, not all icon data.

Further, in this embodiment of this application, a process in which the migration device selects to-be-migrated partial icon data may include: displaying, in the migration device, prompt information to prompt the user to select reference icon data that needs to be migrated; and using icon data that needs to be migrated as partial icon data based on a selection operation of the user, and sending the partial icon data to the to-be-migrated device.

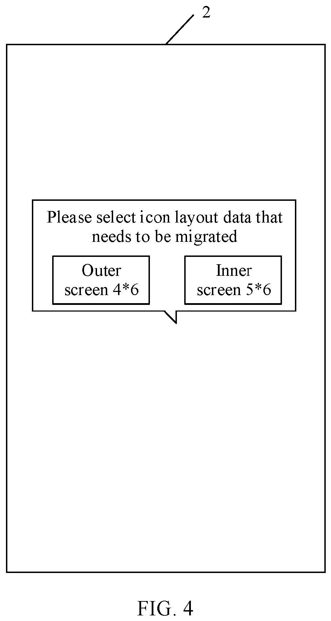

In this embodiment of this application, an example in which the migration device includes two display screens is used. The two display screens include an outer screen and an inner screen. For example, as shown in FIG. 4, a display interface 2 of the migration device displays prompt information: "Please select icon data that needs to be migrated", and provides options "Outer screen 4*6" and "Inner screen 5*6". The display interface 2 is a user-facing display interface, "Outer screen 4*6" is used to indicate icon data corresponding to the outer screen, and "Outer screen 4*6" indicates that an icon layout of the outer screen includes six rows and four columns. "Inner screen 5*6" is used to indicate icon data corresponding to the inner screen, and "Inner screen 5*6" indicates that an icon layout of the inner screen includes six rows and five columns. Icon data that is selected to be migrated is determined based on a received selection operation of the user, and the icon data is used as partial icon data and sent to the to-be-migrated device.

For example, after the user taps a button of "Outer screen 4*6", the icon data corresponding to the outer screen of the migration device is used as partial icon data and sent to the to-be-migrated device.

Step 106: Determine an icon layout of a specified display screen based on the reference icon data.

In this embodiment of this application, when it is determined that the device type of the migration device includes a single-screen device, the specified display screen is used to indicate a display screen of the migration device. When it is determined that the device type of the migration device includes a multi-screen device, the specified display screen is used to indicate a display screen corresponding to the reference icon data. For example, when the migration device includes an outer screen and an inner screen, an icon layout of the outer screen includes six rows and four columns, and an icon layout of the inner screen includes six rows and five columns, it is determined, based on a received selection operation of the user, that icon data that is selected to be migrated is icon data corresponding to the outer screen, that is, the icon data corresponding to the outer screen is used as the reference icon data. Therefore, it can be determined, based on the reference icon data, that the specified display screen is the outer screen, and the icon layout is the icon layout of the outer screen. The icon layout is used to indicate an icon arrangement manner. It can be determined, by using the reference icon data, that the icon layout of the specified display screen of the migration device includes an arrangement layout of a rows and b columns. For example, it can be determined, by using the reference icon data, that the icon layout of the outer screen of the migration device includes six rows and four columns.

Step 108: Determine whether an icon layout of each first display screen is the same as the icon layout of the specified display screen; and if the icon layout of each first display screen is the same as the icon layout of the specified display screen, perform step 110; or if the icon layout of each first display screen is not the same as the icon layout of the specified display screen, perform step 112.

In this embodiment of this application, the icon layout of each first display screen may be obtained based on a layout setting of the to-be-migrated device.

Specifically, a specific execution process of step 108 may include: When it is determined that the device type of the migration device includes a single-screen device, and the device type of the to-be-migrated device includes a multi-screen device, whether the icon layout of each first display screen is the same as the icon layout of the specified display screen needs to be determined. If it is determined that an icon layout of a first display screen is the same as the icon layout of the specified display screen, it indicates that an icon arrangement manner of the first display screen is the same as an icon arrangement manner of the migration device. Therefore, subsequent step 110 may be performed to use the reference icon data of the specified display screen as actual icon data of the first display screen. If it is determined that an icon layout of a first display screen is different from the icon layout of the specified display screen, it indicates that an icon arrangement manner of the first display screen is different from the icon arrangement manner of the migration device. If the reference icon data of the migration device is migrated at a ratio of 1:1, problems of scattered icons, unsatisfactory migrated data, and incomplete icon data are caused by different screen forms. Therefore, step 112 needs to be performed to generate actual icon data by using an icon mapping algorithm and based on the icon layout of the specified display screen and the icon layout of the to-be-migrated device.

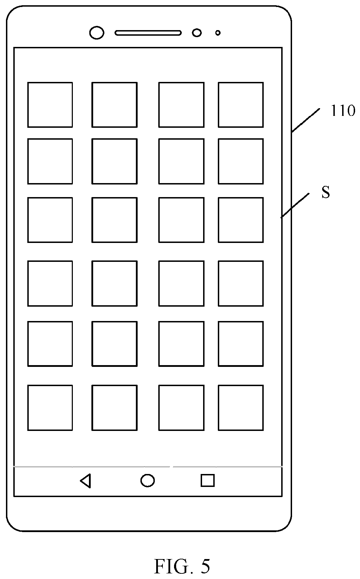

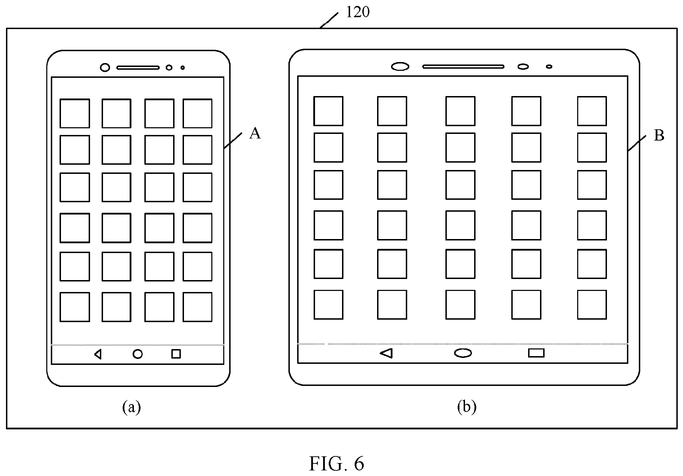

In an optional solution, for example, as shown in FIG. 5, a device type of a migration device 110 includes a single-screen device, and an icon layout of a specified display screen S of the migration device 110 is an arrangement layout of six rows and four columns. As shown in FIG. 6a and FIG. 6b, a device type of a to-be-migrated device (a to-be-migrated device 120) includes a multi-screen device, that is, a plurality of first display screens of the to-be-migrated device 120 include an inner display screen A and an outer display screen B. As shown in FIG. 6a, an icon layout of the inner display screen A includes an arrangement layout of six rows and four columns. As shown in FIG. 6b, an icon layout of the outer display screen B includes an arrangement layout of six rows and five columns. Therefore, step 108 is performed to determine whether the icon layout of each first display screen is the same as the icon layout of the specified display screen, and specifically, to determine whether the icon layout of the inner display screen A is the same as the icon layout of the specified display screen S, and determine whether the icon layout of the outer display screen B is the same as the icon layout of the specified display screen S.

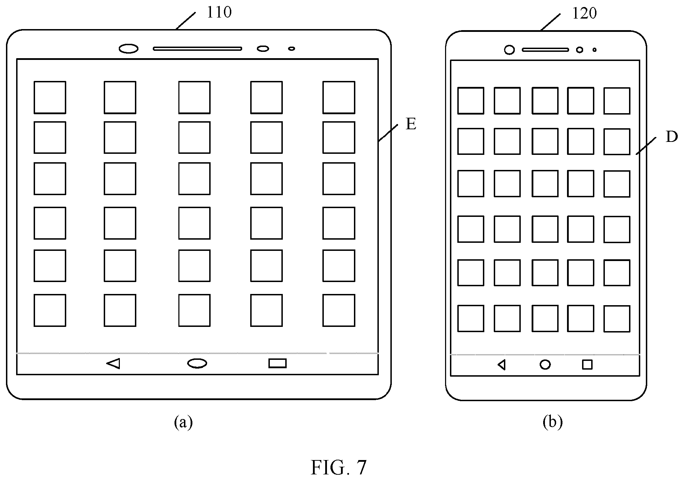

In another optional solution, for example, as shown in FIG. 7a, a device type of a migration device 110 includes a multi-screen device, and it is determined, based on step 106, that an icon layout of a specified display screen E of the migration device 110 includes an arrangement layout of six rows and five columns. A device type of a to-be-migrated device (a to-be-migrated device 120) includes a single-screen device. As shown in FIG. 7b, an icon layout of a first display screen D includes an arrangement layout of six rows and five columns. Therefore, step 108 is performed to determine whether the icon layout of each first display screen is the same as the icon layout of the specified display screen, and specifically, to determine whether the icon layout of the first display screen D is the same as the icon layout of the specified display screen E.

Step 110: Use the reference icon data of the specified display screen as the actual icon data of the first display screen, and continue to perform 116.

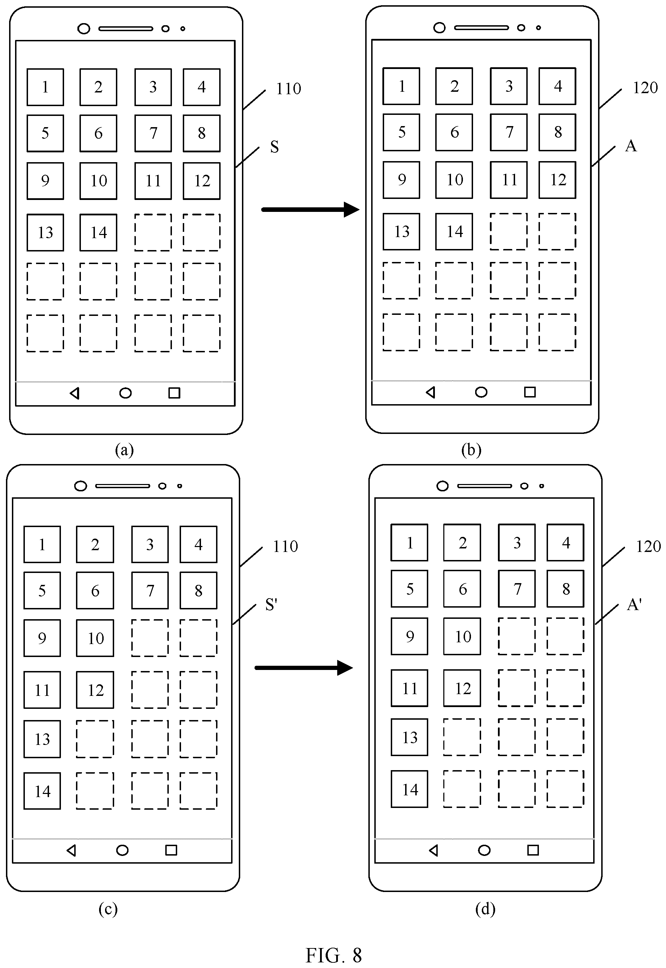

In this embodiment of this application, in an optional solution, when it is determined that the icon layout of the inner display screen A is the same as the icon layout of the specified display screen, step 110 may be performed to use the reference icon data of the specified display screen as the actual icon data of the first display screen. Therefore, an icon layout the same as the icon layout of the migration device 110 can be displayed on the to-be-migrated device 120. For example, FIG. 8a is the icon layout of the specified display screen S of the migration device 110, and FIG. 8b is the icon layout of the inner display screen A of the to-be-migrated device 120. As shown in FIG. 8a and FIG. 8b, because the icon layout of the inner display screen A of the to-be-migrated device 120 is the same as the icon layout of the specified display screen S of the migration device 110, the reference icon data of the migration device may be migrated to the to-be-migrated device 120 at a ratio of 1:1 to generate actual icon data. Further, in FIG. 8a, an icon 1 to an icon 14 may be understood as reference icon data. Because the icon layout of the inner display screen A is the same as the icon layout of the specified display screen S, the reference icon data is used as actual icon data of the inner display screen A. That is, an icon 1 to an icon 14 in FIG. 8b represent the actual icon data of the inner display screen A.

It should be noted that the reference icon data provided in FIG. 8a is merely an instance. In actual application, a position of an icon may be adjusted based on an operation habit of the user. For example, as shown in FIG. 8c, an icon layout of the migration device 110 in FIG. 8c is the same as the icon layout in FIG. 8a (both are six rows and four columns), and a quantity (14) of icons of reference icon data of the migration device 110 in FIG. 8c is the same as a quantity (14) of icons of the reference icon data in FIG. 8a, but arrangement sequences of the icon data are different. That is, the reference icon data may be arranged in a specified position based on the operation habit of the user. Therefore, when an icon layout of an inner display screen A' of the to-be-migrated device 120 is the same as an icon layout of a specified display screen S' of the migration device 110, but an icon data layout is irregular, the process of the foregoing embodiment may still be performed, and the reference icon data of the migration device may be migrated to the to-be-migrated device 120 at a ratio of 1:1 to generate actual icon data. For example, as shown in FIG. 8d, an icon 1 to an icon 14 in FIG. 8d represent actual icon data of the inner display screen A', and an icon layout in FIG. 8d is the same as the icon layout in FIG. 8c.

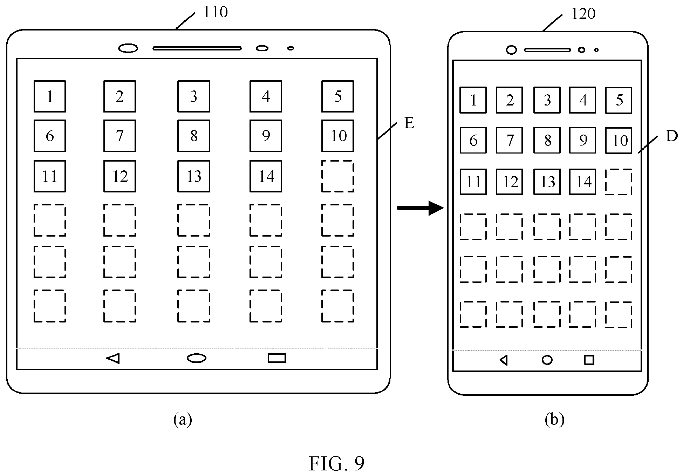

In another optional solution, when it is determined that the icon layout of the first display screen is the same as the icon layout of the specified display screen, step 110 may be performed to use the reference icon data of the specified display screen as the actual icon data of the first display screen. Therefore, an icon layout the same as the icon layout of the migration device can be displayed on the to-be-migrated device. For example, FIG. 9a is the icon layout of the specified display screen E of the migration device 110, and FIG. 9b is the icon layout of the first display screen D of the to-be-migrated device 120. As shown in FIG. 9a and FIG. 9b, because the icon layout of the specified display screen E of the migration device 110 is the same as the icon layout of the first display screen D of the to-be-migrated device 120, reference icon data corresponding to the specified display screen E of the migration device 110 may be migrated to the to-be-migrated device at a ratio of 1:1 to generate actual icon data. For example, as shown in FIG. 9b, actual icon data of the first display screen D is determined. Further, in FIG. 9a, an icon 1 to an icon 14 may be understood as reference icon data. Because the icon layout of the first display screen D is the same as the icon layout of the specified display screen E, the reference icon data is used as the actual icon data of the first display screen D. That is, an icon 1 to an icon 14 in FIG. 9b represent the actual icon data of the first display screen D. A dashed-line box may be understood as a position that does not include icon data, but the dashed-line box belongs to a part of the icon layout. After the user downloads a new application, corresponding icon data is added to the dashed-line box, to display a corresponding icon.

Step 112: Determine the actual icon data of the first display screen by using an icon mapping algorithm and based on the reference icon data and the icon layout of the first display screen.

In this embodiment of this application, the icon layout of the first display interface includes a second quantity of icon columns.

In this embodiment of this application, based on a condition of the optional solution provided in the embodiment of step 108, it may be determined that the icon layout of the outer display screen B is different from the icon layout of the specified display screen S. Therefore, step 112 is performed to determine actual icon data of the outer display screen B. Specifically, an execution process of step 112 may include:

Step 1121: Determine a first quantity of icon columns of the specified display screen from the icon layout of the specified display screen.

In this embodiment of this application, for example, as shown in FIG. 5, the icon layout of the specified display screen S of the migration device 110 includes an arrangement layout of six rows and four columns. Therefore, it may be determined that a first quantity of icon columns of the migration device 110 is 4. For example, as shown in FIG. 7a, the icon layout of the specified display screen E of the migration device 110 includes an arrangement layout of six rows and five columns. Therefore, it may be determined that a first quantity of icon columns of the migration device 110 is 5.

Step 1122: Calculate coordinates of each icon in the icon layout of the first display screen by using the icon mapping algorithm and based on the first quantity of icon columns, the second quantity of icon columns, and obtained coordinates of each icon in the icon layout of the specified display screen.

Specifically, when the second quantity of icon columns includes N columns, and the first quantity of icon columns includes J columns, an execution process of step 1122 may include:

by using an icon mapping algorithm formula:

$$Y' = \big((Y * J) + X\big) \ \% \ N$$

$$X' = \big((Y * J) + X\big) - (Y' * N)$$

calculating coordinates of each icon in the icon layout of each first display screen, where X represents an X-axis coordinate value of an icon in the icon layout of the specified display screen, Y represents a Y-axis coordinate value of the icon in the icon layout of the specified display screen, X' represents an X-axis coordinate value of the icon in the icon layout of the first display screen, and Y' represents a Y-axis coordinate value of the icon in the icon layout of the first display screen.

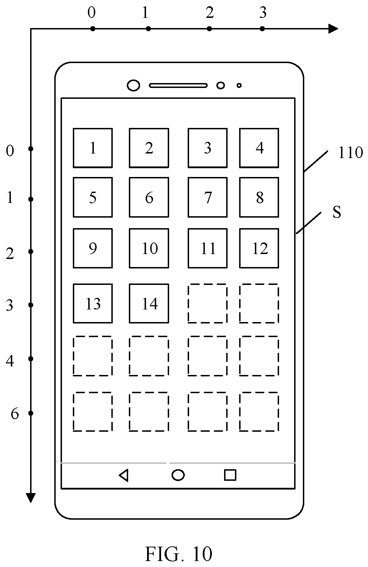

In this embodiment of this application, as shown in FIG. 10, a coordinate system may be established for the icon layout of the specified display screen S of the migration device 110, to obtain coordinates of each icon. For example, coordinates of an icon 1 are (0, 0), and coordinates of an icon 2 are (1, 0).

The icon layout of the inner display screen A of the to-be-migrated device 120 is the same as the icon layout of the specified display screen S of the migration device 110. Therefore, step 110 may be performed to determine actual icon data of the inner display screen A.

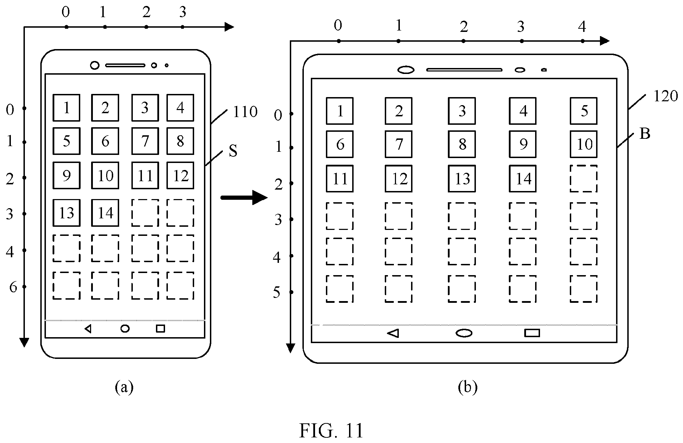

The icon layout of the outer display screen B of the to-be-migrated device 120 is different from the icon layout of the specified display screen S. Therefore, the execution process of step 112 is performed. Specifically, after the coordinates of each icon in the icon layout of the specified display screen S are obtained, the coordinates of each icon in the icon layout of the first display screen may be calculated based on the first quantity of icon columns, the second quantity of icon columns, and the obtained coordinates of each icon in the icon layout of the specified display screen. For example, FIG. 11a is the icon layout of the specified display screen S of the migration device 110, and FIG. 11b is the icon layout of the outer display screen B of the to-be-migrated device 120. As shown in FIG. 11a and FIG. 11b, the first quantity of icon columns includes four columns, and the second quantity of icon columns includes five columns. Coordinates of an icon 5 in the icon layout of the specified display screen S of the migration device 110 are (0, 1), that is, an X-axis coordinate value is 0, and a Y-axis coordinate value is 1. Coordinates of the icon 5 on the outer first display screen B of the to-be-migrated device 120 can be calculated by using the foregoing formula. Specifically, Y (icon 5)' = ((1*4) + 0)%5 = 0, and it is calculated that a Y-axis coordinate of the icon 5 on the outer display screen B is 0; and X (icon 5)' = ((1*4) + 0) - (0*5) = 4, and it is calculated that an X-axis coordinate of the icon 4 on the outer display screen B is 4. Therefore, it is calculated that the coordinates of the icon 5 on the outer display screen B are (4, 0). In the foregoing manner, coordinates of each icon in the icon layout of the outer display screen B can be calculated.

It should be noted that, if the icon data shown in FIG. 7c is migrated to the icon layout shown in FIG. 11b, for such a case in which icon layouts are irregular and the icon layouts are different, the foregoing step may also be performed to calculate coordinates of each icon in the icon layout of the first display screen by using the icon mapping algorithm and based on the first quantity of icon columns, the second quantity of icon columns, and obtained coordinates of each icon in the icon layout of the specified display screen. Details are not described again in this embodiment of this application.

In addition, FIG. 6a is the icon layout of the inner display screen A of the to-be-migrated device 120. In addition to calculating coordinates of each icon in the icon layout of the outer display screen B by performing step 1122, alternatively, a first quantity of icon columns in the icon layout of the inner display screen A of the to-be-migrated device 120 may be determined, and step 112 may be performed to calculate coordinates of each icon in the icon layout of the outer display screen B by using the icon mapping algorithm and based on the first quantity of icon columns, the second quantity of icon columns, and obtained coordinates of each icon in the icon layout of the inner display screen A.

It should be noted that, by using the foregoing icon mapping algorithm formula, a sequence value of each icon in the icon layout of the first display screen can remain unchanged. That is, the coordinates of each icon in the icon layout of the first display screen may be obtained through linkage mapping by using the obtained coordinates of each icon in the icon layout of the specified display screen. Specifically, a sequence value on the specified display screen may be calculated by using an obtained X-axis coordinate value of each icon in the icon layout of the specified display screen, and all icons may be mapped to the icon layout of the first display screen without changing a relative relationship between sequence values.

Step 114: Use a set of the coordinates of each icon as the actual icon data of the first display screen, to determine actual icon data of at least one first display screen; and continue to perform step 116.

In this embodiment of this application, a set of coordinates of icons is obtained by performing step 112, and a set of coordinates of a plurality of icons is used as the actual icon data of the first display screen. It should be noted that, when the device type of the to-be-migrated device includes a multi-screen device, actual icon data of a plurality of first display screens can be determined by performing the foregoing step; and when the device type of the to-be-migrated device includes a single-screen device, actual icon data of one first display screen can be determined by performing the foregoing step.

Step 116: Display an icon corresponding to the actual icon data.

In this embodiment of this application, specifically, step 116 may include: displaying, based on the icon layout of the first display screen, the icon corresponding to the actual icon data.

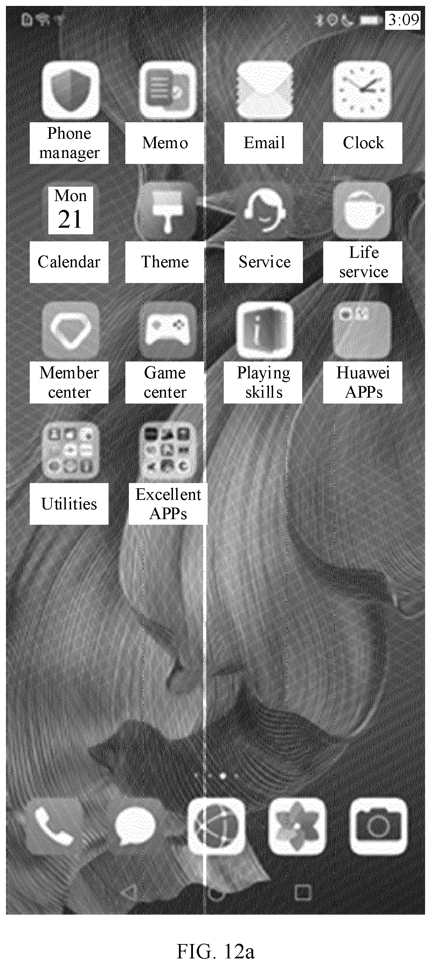

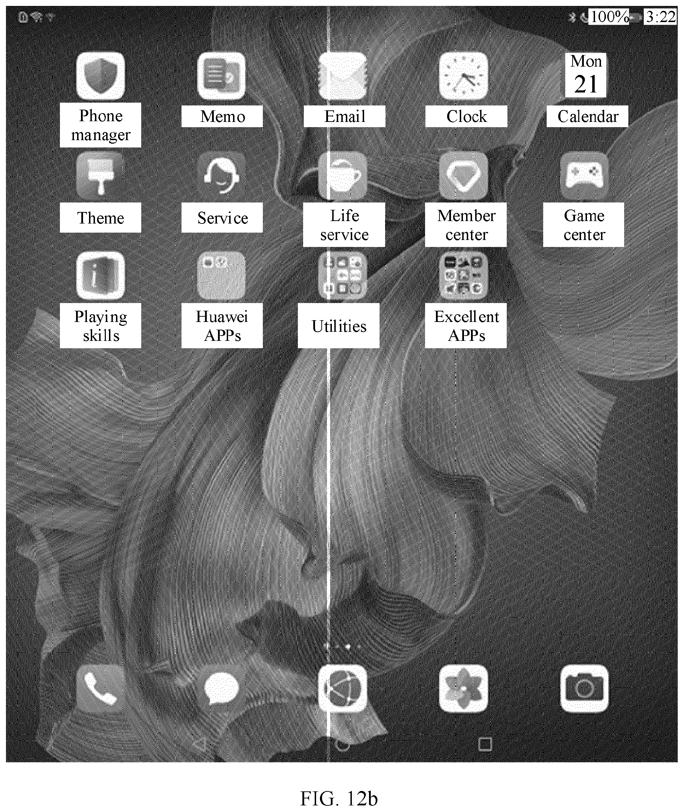

In an optional solution, for example, an example in which the device type of the to-be-migrated device includes a multi-screen device is used, and the to-be-migrated device includes the inner display screen A and the outer display screen B. The actual icon data of the inner display screen A is shown in FIG. 8b, and the actual icon data of the outer display screen B is shown in FIG. 11b. The icon corresponding to the actual icon data can be displayed by performing step 116. Specifically, FIG. 12a is a schematic diagram of an effect of displaying an icon on the inner display screen A, and FIG. 12b is a schematic diagram of an effect of displaying an icon on the outer display screen B. As shown in FIG. 12a, after the actual icon data of the inner display screen A is obtained, an icon corresponding to the actual icon data can be displayed on the inner display screen A based on the icon layout of the inner display screen A, so that the user can normally use the to-be-migrated device. As shown in FIG. 12b, after the actual icon data of the outer display screen B is obtained, an icon corresponding to the actual icon data can be displayed on the outer display screen B based on the icon layout of the outer display screen B, so that the user can normally use the to-be-migrated device.

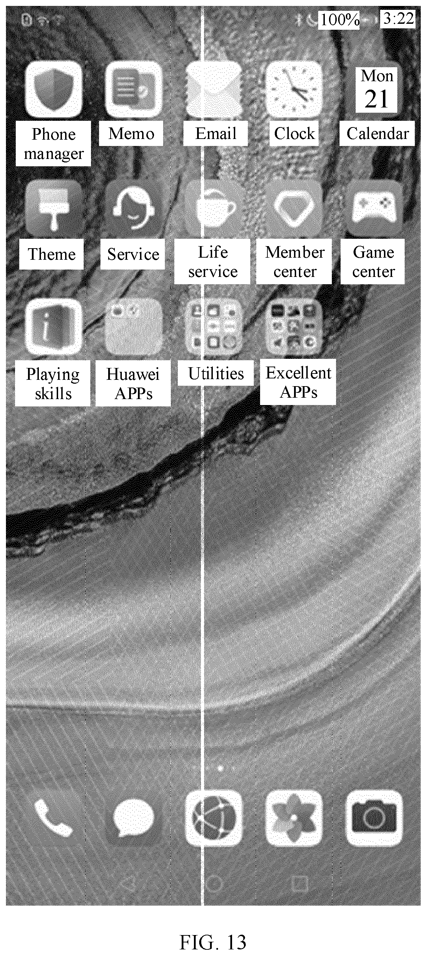

In another optional solution, for example, when the device type of the to-be-migrated device includes a single-screen device, and the first display screen of the to-be-migrated device includes the first display screen D, the actual icon data of the first display screen D is shown in FIG. 9b. The icon corresponding to the actual icon data can be displayed by performing step 116. Specifically, FIG. 13 is a schematic diagram of an effect of displaying an icon on the first display screen D. As shown in FIG. 13, after the actual icon data of the first display screen D is obtained, an icon corresponding to the actual icon data can be displayed on the first display screen D based on the icon layout of the first display screen D, so that the user can normally use the to-be-migrated device.

According to the icon data migration method provided in this embodiment of this application, an operation method for migrating desktop icon data from a single-screen device to a multi-screen device and a calculation method for mapping between different grid layouts are proposed to optimize data, thereby resolving a problem that icons are scattered on the multi-screen device, so that usability of the new device is improved for the user, and original operation and use habits of the user are retained to a maximum extent.

In the embodiment of this application, the link establishment request sent by the migration device is obtained, where the link establishment request carries the device type of the migration device, and the device type includes a single-screen device or a multi-screen device. The reference icon data of the migration device is obtained based on the device type of the migration device and the device type of the to-be-migrated device after the link is successfully established. The actual icon data is calculated based on the reference icon data and the obtained icon layout of the first display screen. The icon corresponding to the actual icon data is displayed based on the icon layout. In this way, icon data migration between migration devices of different device types and to-be-migrated devices of different device types can be implemented, so that a use habit of the user and icon data are retained to a maximum extent, and it is more convenient for the user to organize and manage desktop icons, thereby improving convenience of using the icons by the user.

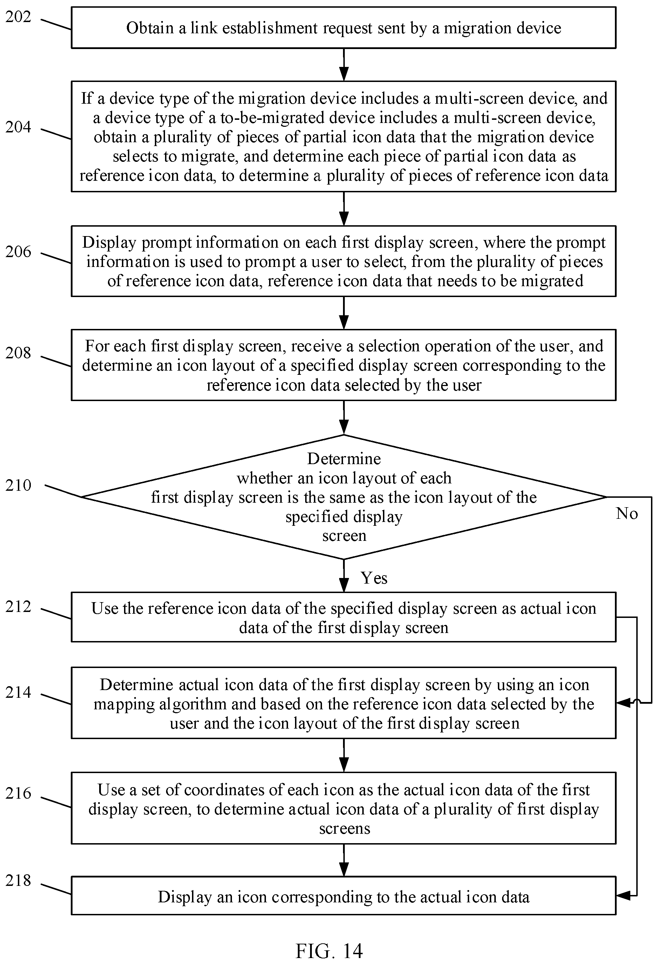

FIG. 14 is a flowchart of an icon data migration method according to an embodiment of this application. The method is applied to a to-be-migrated device. As shown in FIG. 14, the method includes the following steps.

Step 202: Obtain a link establishment request sent by a migration device.

In this embodiment of this application, for an execution process of step 202, refer to step 102.

Step 204: If a device type of the migration device includes a multi-screen device, and a device type of the to-be-migrated device includes a multi-screen device, obtain a plurality of pieces of partial icon data that the migration device selects to migrate, and determine each piece of partial icon data as reference icon data, to determine a plurality of pieces of reference icon data.

Ir the embodiment of this application, the multi-screen device includes a plurality of display screens, and the partial icon data is used to indicate icon data corresponding to one specified display screen of the migration device.

In this embodiment of this application, because the device type of the migration device includes a multi-screen device, that is, the migration device has a plurality of specified display screens, icon data corresponding to one specified display screen is used as one piece of partial icon data, to obtain a plurality of pieces of partial icon data that the migration device selects to migrate. For example, when the migration device includes two display screens, icon data corresponding to each display screen is separately used as partial icon data and sent to the to-be-migrated device.

Step 206: Display prompt information on each first display screen, where the prompt information is used to prompt a user to select, from the plurality of pieces of reference icon data, reference icon data that needs to be migrated.

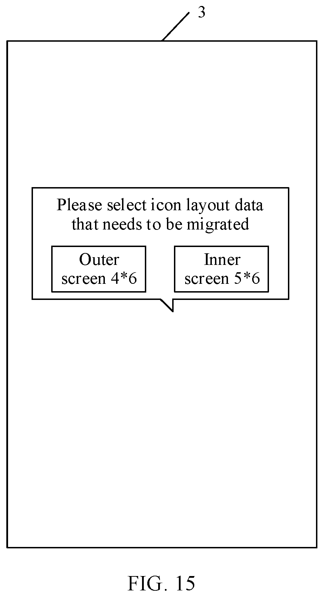

In this embodiment of this application, an example in which the to-be-migrated device includes two display screens is used. The two display screens include an outer screen and an inner screen. For example, as shown in FIG. 15, a display interface 3 of the to-be-migrated device 120 displays prompt information: "Please select icon data that needs to be migrated", and provides options "Outer screen 4*6" and "Inner screen 5*6". The display interface 3 is a user-facing display interface, "Outer screen 4*6" is used to indicate icon data corresponding to the outer screen, and "Outer screen 4*6" indicates that an icon layout of the outer screen includes six rows and four columns. "Inner screen 5*6" is used to indicate icon data corresponding to the inner screen, and "Inner screen 5*6" indicates that an icon layout of the inner screen includes six rows and five columns. Icon data that is selected to be migrated is determined based on a received selection operation of the user, and the icon data is used as partial icon data and sent to the to-be-migrated device 120.

Step 208: For each first display screen, receive a selection operation of the user, and determine an icon layout of a specified display screen corresponding to the reference icon data selected by the user.

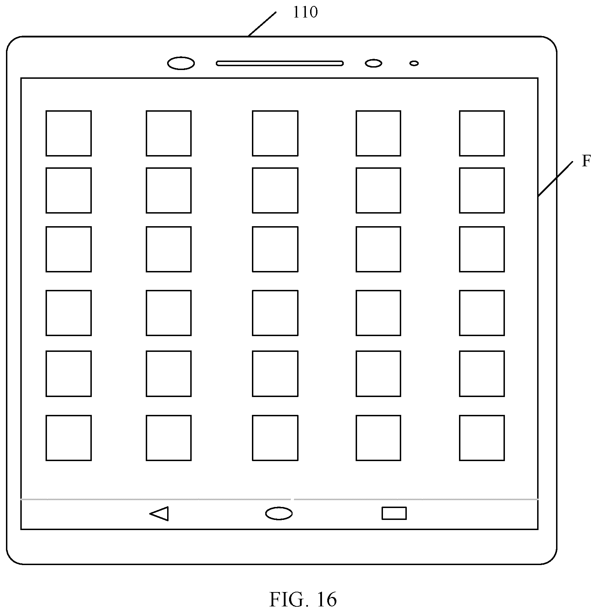

In this embodiment of this application, as shown in FIG. 16, when a selection operation of tapping "Inner screen 5*6" by the user is received, a specified display screen corresponding to reference icon data of "Inner screen 5*6" is determined. For example, as shown in FIG. 16, determined "Inner screen 5*6" is an icon layout of a specified display screen F of the migration device 110.

Step 210: Determine whether an icon layout of each first display screen is the same as the icon layout of the specified display screen; and if the icon layout of each first display screen is the same as the icon layout of the specified display screen, perform step 212; or if the icon layout of each first display screen is not the same as the icon layout of the specified display screen, perform step 214.

In this embodiment of this application, when it is determined that the device type of the migration device includes a multi-screen device, and the device type of the to-be-migrated device includes a multi-screen device, whether the icon layout of each first display screen is the same as the icon layout of the specified display screen selected by the user needs to be determined. If it is determined that an icon layout of a first display screen is the same as the icon layout of the specified display screen, it indicates that an icon arrangement manner of the first display screen is the same as an icon arrangement manner of the migration device. Therefore, subsequent step 212 is performed to use the reference icon data of the specified display screen as actual icon data of the first display screen. If it is determined that an icon layout of a first display screen is different from the icon layout of the specified display screen, it indicates that an icon arrangement manner of the first display screen is different from the icon arrangement manner of the migration device. If the reference icon data of the migration device is migrated at a ratio of 1:1, problems of scattered icons, unsatisfactory migrated data, and incomplete icon data are caused by different screen forms. Therefore, step 214 needs to be performed to generate actual icon data by using an icon mapping algorithm and based on the icon layout of the specified display screen and the icon layout of the to-be-migrated device.

Specifically, an execution process of step 206 to step 210 is described by using an example.

For example, when the migration device includes a display screen F and a display screen G, and the to-be-migrated device includes a display screen H and a display screen I, a current user-facing display screen is first obtained. For example, when the current user-facing display screen includes the display screen H, prompt information first needs to be displayed on the display screen H, to prompt the user to select, from reference icon data corresponding to the display screen F and reference icon data corresponding to the display screen G, reference icon data that needs to be migrated to the display screen H. If the user selects the reference icon data corresponding to the display screen F, step 210 needs to be performed to determine whether an icon layout of the display screen H is the same as the icon layout of the specified display screen (display screen F); and if the icon layout of the display screen H is the same as the icon layout of the specified display screen (display screen F), step 212 is performed to use the reference icon data of the display screen F as actual icon data of the display screen H; or if the icon layout of the display screen H is different from the icon layout of the specified display screen (display screen F), step 214 is performed to determine actual icon data of the display screen H. After the actual icon data of the display screen H is determined, an icon corresponding to the actual icon data is displayed on the display screen H based on the icon layout of the display screen H. Similarly, in the foregoing manner, actual icon data of the display screen I is determined, and an icon corresponding to the actual icon data is displayed on the display screen I based on an icon layout of the display screen H.

It should be noted that, in a process of determining the actual icon data of the display screen I, because the reference icon data corresponding to the display screen F is already selected for the display screen H, to avoid integrity of icon data, the user may be prompted to select the reference icon data corresponding to the display screen G when selecting reference icon data that needs to be migrated to the display screen I, thereby ensuring that the icon data is retained to a maximum extent, and avoiding a problem that migrated icon data is incomplete or missing.

Step 212: Use the reference icon data of the specified display screen as the actual icon data of the first display screen, and continue to perform step 218.

In this embodiment of this application, for an execution process of step 210, refer to step 110.

Step 214: Determine the actual icon data of the first display screen by using an icon mapping algorithm and based on the reference icon data selected by the user and the icon layout of the first display screen.

In this embodiment of this application, the icon layout of the to-be-migrated device includes a second quantity of icon columns.

In this embodiment of this application, step 214 specifically includes:

Step 2141: Determine a first quantity of icon columns of the specified display screen based on the icon layout of the specified display screen corresponding to the reference icon data selected by the user.

In this embodiment of this application, for an execution process of step 2141, refer to step 1121.

Step 2142: Calculate coordinates of each icon in the icon layout of the first display screen by using the icon mapping algorithm and based on the first quantity of icon columns, the second quantity of icon columns, and obtained coordinates of each icon in the icon layout of the specified display screen.

An execution process of step 2142 may include:

The second quantity of icon columns includes N columns, and the first quantity of icon columns includes J columns; and

by using an icon mapping algorithm formula:

$$Y' = \big((Y * J) + X\big) \ \% \ N$$

$$X' = \big((Y * J) + X\big) - (Y' * N)$$

calculating coordinates of each icon in the icon layout of each first display screen, where X represents an X-axis coordinate value of an icon in the icon layout of the specified display screen, Y represents a Y-axis coordinate value of the icon in the icon layout of the specified display screen, X' represents an X-axis coordinate value of the icon in the icon layout of the first display screen, and Y' represents a Y-axis coordinate value of the icon in the icon layout of the first display screen.

In this embodiment of this application, for an execution process of step 2142, refer to step 1122.

Step 216: Use a set of the coordinates of each icon as the actual icon data of the first display screen, to determine actual icon data of a plurality of first display screens.

In this embodiment of this application, a set of coordinates of icons is obtained by performing step 214, and a set of coordinates of a plurality of icons is used as the actual icon data of the first display screen. It should be noted that, when the device type of the to-be-migrated device includes a multi-screen device, actual icon data of a plurality of first display screens can be determined by performing the foregoing step.

Step 218: Display an icon corresponding to the actual icon data.

In this embodiment of this application, specifically, step 218 may include: displaying, based on the icon layout of each first display screen, the icon corresponding to the actual icon data.

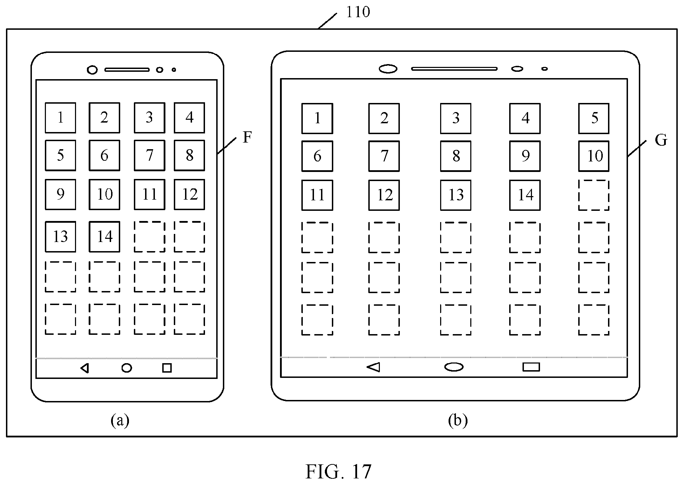

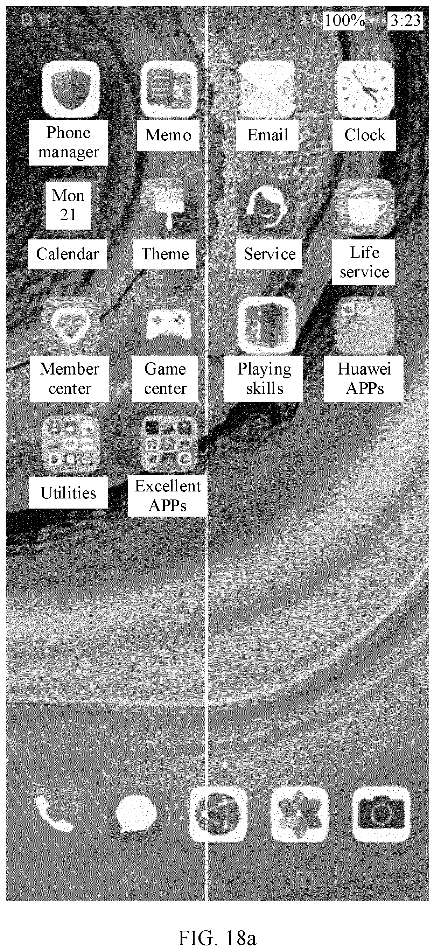

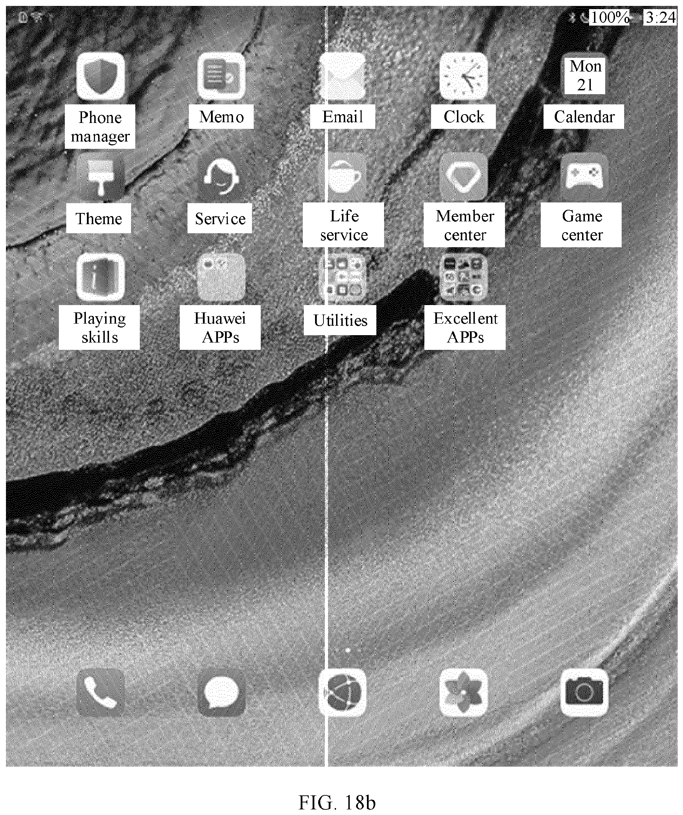

In an optional solution, an example in which the migration device 110 includes a display screen F and a display screen G, and the to-be-migrated device 120 includes a display screen H and a display screen I is used. FIG. 17a is a schematic diagram of an effect of an icon layout of the display screen F, and FIG. 17b is a schematic diagram of an effect of an icon layout of the display screen G. In addition, in FIG. 17a and FIG. 17b, the display screen F and the display screen G each have corresponding reference icon data. According to the foregoing embodiment, it is assumed that the reference icon data corresponding to the display screen F is selected to be migrated to the display screen H, and the reference icon data corresponding to the display screen G is selected to be migrated to the display screen I. As shown in FIG. 18a, after actual icon data of the display screen H is obtained, an icon corresponding to the actual icon data can be displayed on the display screen H based on an icon layout of the display screen H, so that the user can normally use the to-be-migrated device. As shown in FIG. 18b, after actual icon data of the display screen I is obtained, an icon corresponding to the actual icon data can be displayed on the display screen I based on an icon layout of the display screen I, so that the user can normally use the to-be-migrated device. It should be noted that the foregoing solution is merely an example for description. In addition, alternatively, the reference icon data corresponding to the display screen G may be selected to be migrated to the display screen H, and the reference icon data corresponding to the display screen F may be selected to be migrated to the display screen I. This is not limited in this embodiment of this application. Further, the foregoing icon data migration method may still be performed for more than two display screens. Details are not described herein.

In this embodiment of this application, the link establishment request sent by the migration device is obtained, where the link establishment request carries the device type of the migration device, and the device type includes a single-screen device or a multi-screen device. The reference icon data of the migration device is obtained based on the device type of the migration device and the device type of the to-be-migrated device after the link is successfully established. The actual icon data is calculated based on the reference icon data and the obtained icon layout of the first display screen. The icon corresponding to the actual icon data is displayed based on the icon layout. In this way, icon data migration between migration devices of different device types and to-be-migrated devices of different device types can be implemented, so that a use habit of the user and icon data are retained to a maximum extent, and it is more convenient for the user to organize and manage desktop icons, thereby improving convenience of using the icons by the user.

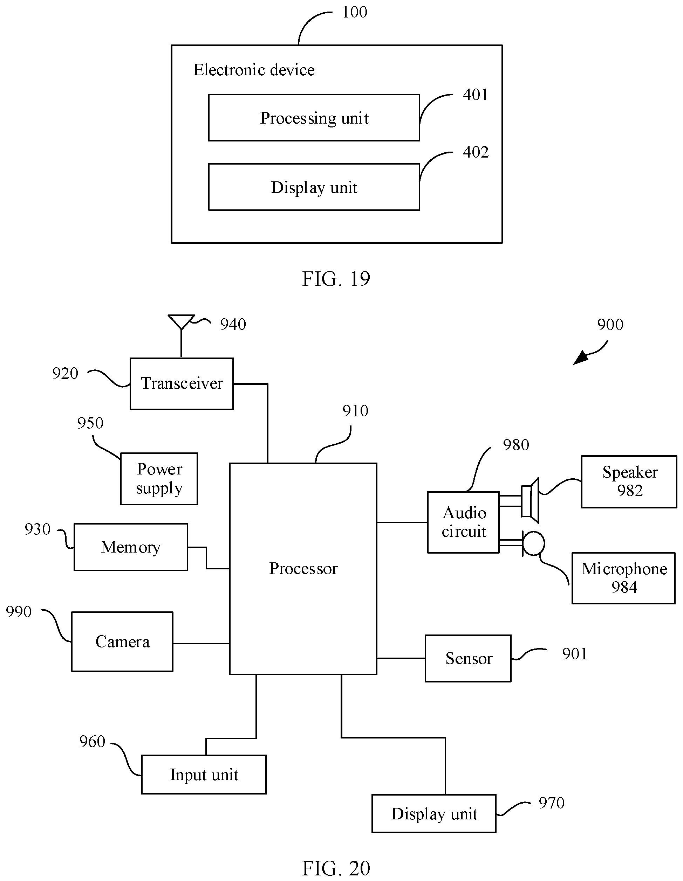

FIG. 19 is a schematic block diagram of an electronic device 110 according to an embodiment of this application. It should be understood that the electronic device 110 can perform the steps in the icon data migration methods in FIG. 3 and FIG. 14. To avoid repetition, details are not described herein. As shown in FIG. 19, the electronic device 110 includes a processing unit 401 and a display unit 402.

The processing unit 401 is configured to: obtain a link establishment request sent by a migration device, where the link establishment request carries a device type of the migration device, and the device type includes a single-screen device or a multi-screen device; obtain reference icon data of the migration device based on the device type of the migration device and a device type of the electronic device 110 after a link is successfully established; and calculate actual icon data based on the reference icon data and an obtained icon layout of the first display screen.

The display unit 402 is configured to display an icon corresponding to the actual icon data.

In this embodiment of this application, the processing unit 401 is further configured to: if the device type of the migration device includes a single-screen device, and the device type of the electronic device 110 includes a multi-screen device, obtain all icon data sent by the migration device, and determine all the icon data as the reference icon data, where the multi-screen device may include a plurality of display screens.

In this embodiment of this application, the processing unit 401 is further configured to: if the device type of the migration device includes a multi-screen device, and the device type of the electronic device 110 includes a single-screen device, obtain partial icon data that the migration device selects to migrate, and determine the partial icon data as the reference icon data, where the multi-screen device may include a plurality of display screens, and the partial icon data is used to indicate icon data corresponding to one specified display screen of the migration device.

In this embodiment of this application, the processing unit 401 is further configured to: determine an icon layout of a specified display screen of the migration device based on the reference icon data; determine whether an icon layout of each first display screen is the same as the icon layout of the specified display screen; and if it is determined that the icon layout of the first display screen is the same as the icon layout of the specified display screen, use the reference icon data of the specified display screen as the actual icon data of the first display screen; or if it is determined that the icon layout of the first display screen is different from the icon layout of the specified display screen, determine the actual icon data of the first display screen by using an icon mapping algorithm and based on the reference icon data and the icon layout of the first display screen.

In this embodiment of this application, the icon layout of the first display interface includes a second quantity of icon columns. The processing unit 401 is further configured to: determine a first quantity of icon columns of the specified display screen from the icon layout of the specified display screen; calculate coordinates of each icon in the icon layout of the first display screen by using the icon mapping algorithm and based on the first quantity of icon columns, the second quantity of icon columns, and obtained coordinates of each icon in the icon layout of the specified display screen; and use a set of the coordinates of each icon as the actual icon data of the first display screen, to determine actual icon data of at least one first display screen.

In this embodiment of this application, the second quantity of icon columns includes N columns, and the first quantity of icon columns includes J columns. The processing unit 401 is further configured to: by using an icon mapping algorithm formula:

$$Y' = \big((Y * J) + X\big) ~\% ~ N$$

$$X' = \big((Y * J) + X\big) - (Y' * N)$$

calculate coordinates of each icon in the icon layout of each first display screen, where X represents an X-axis coordinate value of an icon in the icon layout of the specified display screen, Y represents a Y-axis coordinate value of the icon in the icon layout of the specified display screen, X' represents an X-axis coordinate value of the icon in the icon layout of the first display screen, and Y' represents a Y-axis coordinate value of the icon in the icon layout of the first display screen.

In this embodiment of this application, the processing unit 401 is further configured to: if the device type of the migration device includes a multi-screen device, and the device type of the electronic device 110 includes a multi-screen device, obtain a plurality of pieces of partial icon data that the migration device selects to migrate, and determine each piece of partial icon data as the reference icon data, to determine a plurality of pieces of reference icon data, where the multi-screen device may include a plurality of display screens, and the partial icon data is used to indicate icon data corresponding to one specified display screen of the migration device.

In this embodiment of this application, the processing unit 401 is further configured to: display prompt information on each first display screen, where the prompt information is used to prompt a user to select, from the plurality of pieces of reference icon data, reference icon data that needs to be migrated; for each first display screen, receive a selection operation of the user, and determine an icon layout of a specified display screen corresponding to the reference icon data selected by the user; determine whether an icon layout of each first display screen is the same as the icon layout of the specified display screen; and if it is determined that the icon layout of the first display screen is the same as the icon layout of the specified display screen, use the reference icon data of the specified display screen as the actual icon data of the first display screen; or if it is determined that the icon layout of the first display screen is different from the icon layout of the specified display screen, determine the actual icon data of the first display screen by using an icon mapping algorithm and based on the reference icon data selected by the user and the icon layout of the first display screen.

In this embodiment of this application, the icon layout of the first display interface includes a second quantity of icon columns. The processing unit 401 is further configured to: determine a first quantity of icon columns of the specified display screen based on the icon layout of the specified display screen corresponding to the reference icon data selected by the user; calculate coordinates of each icon in the icon layout of the first display screen by using the icon mapping algorithm and based on the first quantity of icon columns, the second quantity of icon columns, and obtained coordinates of each icon in the icon layout of the specified display screen; and use a set of the coordinates of each icon as the actual icon data of the first display screen, to determine actual icon data of a plurality of first display screens.

It should be understood that the electronic device 110 herein is embodied in a form of a functional unit. The term "unit" herein may be implemented in a form of software and/or hardware. This is not specifically limited. For example, the "unit" may be a software program, a hardware circuit, or a combination thereof that implements the foregoing function. The hardware circuit may include an application-specific integrated circuit (application-specific integrated circuit, ASIC), an electronic circuit, a processor (for example, a shared processor, a dedicated processor, or a group processor) configured to execute one or more software or firmware programs, a memory, a merged logic circuit, and/or another appropriate component that supports the described function.

Therefore, the units in the example described in this embodiment of this application can be implemented by electronic hardware, or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

An embodiment of this application further provides an electronic device. The electronic device may be a terminal device, or may be a circuit device built in the terminal device. The device may be configured to perform functions/steps in the foregoing method embodiments.

FIG. 20 is a schematic diagram of a structure of an electronic device according to an embodiment of this application. As shown in FIG. 20, an electronic device 900 includes a processor 910 and a transceiver 920. The electronic device 900 further includes a memory 930. The processor 910, the transceiver 920, and the memory 930 may communicate with each other by using an internal connection path, to transmit a control signal and/or a data signal. The memory 930 is configured to store a computer program. The processor 910 is configured to invoke and run the computer program from the memory 930.

Optionally, the electronic device 900 may further include an antenna 940, configured to send a radio signal output by the transceiver 920.

The processor 910 and the memory 930 may be combined into one processing apparatus, or more commonly, may be components that are independent of each other. The processor 910 is configured to execute program code stored in the memory 930, to implement the foregoing function. During specific implementation, the memory 930 may alternatively be integrated into the processor 910, or may be independent of the processor 910. The processor 910 may correspond to the processing unit 401 in the electronic device 110 in FIG. 19.

In addition, to improve functions of the electronic device 900, the electronic device 900 may further include one or more of an input unit 960, a display unit 970, an audio circuit 980, a camera 990, a sensor 901, or the like. The audio circuit may further include a speaker 982, a microphone 984, and the like. The display unit 970 may include a display, and the display unit 970 may correspond to the display unit 402 in the electronic device 110 in FIG. 19.

Optionally, the electronic device 900 may further include a power supply 950, configured to supply power to various components or circuits in the terminal device.

It should be understood that the electronic device 900 shown in FIG. 20 can implement the processes in the method embodiments shown in FIG. 3 and FIG. 14. Operations and/or functions of the units in the electronic device 900 are respectively used to implement corresponding procedures in the foregoing method embodiments. For details, refer to the descriptions in the foregoing method embodiments. To avoid repetition, detailed descriptions are appropriately omitted herein.

It should be understood that the processor 910 in the electronic device 900 shown in FIG. 20 may be a system on a chip (system on a chip, SOC). The processor 910 may include a central processing unit (central processing unit, CPU), and may further include another type of processor. The CPU may be referred to as a host CPU. Processors work together to implement the foregoing method procedures, and each processor may selectively execute a part of a software driver.

In conclusion, processors or processing units in the processor 910 may cooperate to implement the foregoing method procedures, and software programs corresponding to the processors or the processing units may be stored in the memory 930.

This application further provides a computer-readable storage medium. The computer-readable storage medium stores instructions, and when the instructions are run on a computer, the computer is enabled to perform the steps in the icon data migration methods shown in FIG. 3 and FIG. 14.

In the foregoing embodiments, the processor 910 may include, for example, a central processing unit (central processing unit, CPU), a microprocessor, a microcontroller, or a digital signal processor, and may further include a GPU, an NPU, and an ISP. The processor may further include a necessary hardware accelerator or a logic processing hardware circuit, for example, an application-specific integrated circuit (application-specific integrated circuit, ASIC), or one or more integrated circuits configured to control program execution of the technical solutions of this application. In addition, the processor may have a function of operating one or more software programs, and the software programs may be stored in the memory.

The memory may be a read-only memory (read-only memory, ROM) or another type of static storage device that can store static information and instructions, a random access memory (random access memory, RAM) or another type of dynamic storage device that can store information and instructions, an electrically erasable programmable read-only memory (electrically erasable programmable read-only memory, EEPROM), a compact disc read-only memory (compact disc read-only memory, CD-ROM) or another compact disc storage, an optical disc storage (including a compact disc, a laser disc, an optical disc, a digital versatile disc, a Blu-ray disc, and the like), a disk storage medium or another magnetic storage device, or any other medium capable of carrying or storing desired program code in a form of an instruction or a data structure and capable of being accessed by a computer.

In the embodiments of this application, "at least one" means one or more, and "a plurality of" means two or more. The term "and/or" describes an association relationship between associated objects, and indicates that there may be three relationships. For example, A and/or B may indicate the following cases: There is only A, there are both A and B, and there is only B. A and B may be singular or plural. The character "/" generally indicates an "or" relationship between associated objects. "At least one of the following items" or a similar expression indicates any combination of these items, including a single item or any combination of a plurality of items. For example, at least one of a, b, or c may indicate a, b, c, a-b, a-c, b-c, or a-b-c, where a, b, and c may be singular or plural.

A person of ordinary skill in the art may be aware that units and algorithm steps described in embodiments disclosed in this specification may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein.

In the embodiments provided in this application, when any function is implemented in a form of a software functional unit and sold or used as an independent product, the function may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, or a network device) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

**Claims**

1. An icon data migration method, applied to a to-be-migrated device, wherein the to-be-migrated device comprises a first display screen, and the method comprises:

   establishing a link between the to-be-migrated device and a migration device based on a link establishment request, sent by a migration device,
   wherein the link establishment request carries a device type of the migration device, and the device type comprises a single-screen device or a multi-screen device;
   obtaining (104) reference icon data of the migration device based on a device type of the migration device and a device type of the to-be-migrated device;
   calculating actual icon data based on the reference icon data and an obtained icon layout of the first display screen; and
   displaying (116, 218) an icon corresponding to the actual icon data,
   wherein the obtaining (104) reference icon data of the migration device based on a device type of the migration device and a device type of the to-be-migrated device comprises:

      if the device type of the migration device comprises a single-screen device, and the device type of the to-be-migrated device comprises a multi-screen device, obtaining all icon data sent by the migration device, and determining all the icon data as the reference icon data, wherein the multi-screen device comprises a plurality of display screens,
      if the device type of the migration device comprises a multi-screen device, and the device type of the to-be-migrated device comprises a single-screen device, obtaining partial icon data that the migration device selects to migrate, and determining the partial icon data as the reference icon data, wherein the multi-screen device comprises a plurality of display screens, and the partial icon data is used to indicate icon data corresponding to one specified display screen of the migration device, and
      if the device type of the migration device comprises a multi-screen device, and the device type of the to-be-migrated device comprises a multi-screen device, obtaining (204) a plurality of pieces of partial icon data that the migration device selects to migrate, and determining each piece of partial icon data as the reference icon data, to determine a plurality of pieces of reference icon data, wherein the multi-screen device comprises a plurality of display screens, a piece of the partial icon data is used to indicate icon data corresponding to one specified display screen of the migration device.

2. The method according to claim 1, wherein if the device type of the migration device comprises a single-screen device and the device type of the to-be-migrated device comprises a multi-screen device, or if the device type of the migration device comprises a multi-screen device and the device type of the to-be-migrated device comprises a single-screen device, the calculating actual icon data based on the reference icon data and an obtained icon layout of the first display screen comprises:

   determining (108) an icon layout of a specified display screen of the migration device based on the reference icon data; and
   in response to the icon layout of the first display screen being the same as the icon layout of the specified display screen, using (110) the reference icon data of the specified display screen as the actual icon data of the first display screen; or
   in response to the icon layout of the first display screen being different from the icon layout of the specified display screen, determining (112) the actual icon data of the first display screen by using an icon mapping algorithm and based on the reference icon data and the icon layout of the first display screen.

3. The method according to claim 2, wherein the icon layout of the first display interface comprises a second quantity of icon columns; and
the determining the actual icon data of the first display screen by using an icon mapping algorithm and based on the reference icon data and the icon layout of the first display screen comprises:

   determining a first quantity of icon columns of the specified display screen from the icon layout of the specified display screen;
   calculating coordinates of each icon in the icon layout of the first display screen by using the icon mapping algorithm and based on the first quantity of icon columns, the second quantity of icon columns, and obtained coordinates of each icon in the icon layout of the specified display screen; and
   using a set of the coordinates of each icon as the actual icon data of the first display screen, to determine actual icon data of at least one first display screen.

4. The method according to claim 3, wherein the second quantity of icon columns comprises N columns, and the first quantity of icon columns comprises J columns; and

   the calculating coordinates of each icon in the icon layout of the first display screen by using the icon mapping algorithm and based on the first quantity of icon columns, the second quantity of icon columns, and obtained coordinates of each icon in the icon layout of the specified display screen comprises:
   by using an icon mapping algorithm formula:

$$Y' = \big((Y * J) + X\big) \% N$$

$$X' = \big((Y * J) + X\big) - (Y' * N)$$

   calculating coordinates of each icon in the icon layout of each first display screen, wherein X represents an X-axis coordinate value of an icon in the icon layout of the specified display screen, Y represents a Y-axis coordinate value of the icon in the icon layout of the specified display screen, X' represents an X-axis coordinate value of the icon in the icon layout of the first display screen, and Y' represents a Y-axis coordinate value of the icon in the icon layout of the first display screen.

5. The method according to claim 1, wherein if the device type of the migration device comprises a multi-screen device, and the device type of the to-be-migrated device comprises a multi-screen device, the calculating actual icon data based on the reference icon data and an obtained icon layout of the first display screen comprises:

   displaying (206) prompt information on each first display screen, wherein the prompt information is used to prompt a user to select, from the plurality of pieces of reference icon data, reference icon data that needs to be migrated, for each first display screen, receiving (208) a selection operation of the user, and determining (210) an icon layout of a specified display screen corresponding to the reference icon data selected by the user; and
   in response to the icon layout of the first display screen being the same as the icon layout of the specified display screen, using (212) the reference icon data of the specified display screen as the actual icon data of the first display screen; or
   in response to the icon layout of the first display screen being different from the icon layout of the specified display screen, determining (214) the actual icon data of the first display screen by using an icon mapping algorithm and based on the reference icon data selected by the user and the icon layout of the first display screen.

6. The method according to claim 5, wherein the icon layout of the first display screen comprises a second quantity of icon columns; and
the determining the actual icon data of the first display screen by using an icon mapping algorithm and based on the reference icon data selected by the user and the icon layout of the first display screen comprises:

   determining a first quantity of icon columns of the specified display screen based on the icon layout of the specified display screen corresponding to the reference icon data selected by the user;
   calculating coordinates of each icon in the icon layout of the first display screen by using the icon mapping algorithm and based on the first quantity of icon columns, the second quantity of icon columns, and obtained coordinates of each icon in the icon layout of the specified display screen; and
   using a set of the coordinates of each icon as the actual icon data of the first display screen, to determine actual icon data of a plurality of first display screens.

7. An electronic device (900), wherein the electronic device (900) comprises:

a display (970);
one or more processors (910);
a memory (930); and
one or more computer programs, wherein the one or more computer programs are stored in the memory (930), the one or more computer programs comprise instructions, and when the instructions are executed by the electronic device (900), the electronic device (900) is enabled to perform the icon data migration method according to any one of claims 1 to 6.

8. A computer-readable storage medium, wherein the computer-readable storage medium comprises a stored program, and when the program is run, a device in which the computer-readable storage medium is located is controlled to perform the icon data migration method according to any one of claims 1 to 6.

**Patentansprüche**

1. Symboldatenmigrationsverfahren, angewandt auf eine zu migrierende Vorrichtung, wobei die zu migrierende Vorrichtung einen ersten Anzeigebildschirm umfasst und das Verfahren Folgendes umfasst:

Herstellen einer Verbindung zwischen der zu migrierenden Vorrichtung und einer Migrationsvorrichtung basierend auf einer Verbindungsherstellungsanforderung, die durch eine Migrationsvorrichtung gesendet wird, wobei die Verbindungsherstellungsanforderung einen Vorrichtungstyp der Migrationsvorrichtung enthält und der Vorrichtungstyp eine Einzelbildschirmvorrichtung oder eine Mehrfachbildschirmvorrichtung umfasst;
Erlangen (104) von Referenzsymboldaten der Migrationsvorrichtung basierend auf einem Vorrichtungstyp der Migrationsvorrichtung und einem Vorrichtungstyp der zu migrierenden Vorrichtung;
Berechnen von tatsächlichen Symboldaten basierend auf den Referenzsymboldaten und einem erlangten Symbollayout des ersten Anzeigebildschirms; und
Anzeigen (116, 218) eines Symbols, das den tatsächlichen Symboldaten entspricht,
wobei das Erlangen (104) von Referenzsymboldaten der Migrationsvorrichtung basierend auf einem Vorrichtungstyp der Migrationsvorrichtung und einem Vorrichtungstyp der zu migrierenden Vorrichtung Folgendes umfasst:

wenn der Vorrichtungstyp der Migrationsvorrichtung eine Einzelbildschirmvorrichtung umfasst und der Vorrichtungstyp der zu migrierenden Vorrichtung eine Mehrfachbildschirmvorrichtung umfasst, Erlangen aller durch die Migrationsvorrichtung gesendeten Symboldaten und Bestimmen aller Symboldaten als Referenzsymboldaten, wobei die Mehrfachbildschirmvorrichtung eine Vielzahl von Anzeigebildschirmen umfasst,
wenn der Vorrichtungstyp der Migrationsvorrichtung eine Mehrfachbildschirmvorrichtung umfasst und der Vorrichtungstyp der zu migrierenden Vorrichtung eine Einzelbildschirmvorrichtung umfasst, Erlangen von Teilsymboldaten, die die Migrationsvorrichtung zum Migrieren auswählt, und Bestimmen der Teilsymboldaten als Referenzsymboldaten, wobei die Mehrfachbildschirmvorrichtung eine Vielzahl von Anzeigebildschirmen umfasst und die Teilsymboldaten verwendet werden, um Symboldaten anzugeben, die einem definierten Anzeigebildschirm der Migrationsvorrichtung entsprechen, und
wenn der Vorrichtungstyp der Migrationsvorrichtung eine Mehrfachbildschirmvorrichtung umfasst und der Vorrichtungstyp der zu migrierenden Vorrichtung eine Mehrfachbildschirmvorrichtung umfasst, Erlangen (204) einer Vielzahl von Teilen von Teilsymboldaten, die die Migrationsvorrichtung zum Migrieren auswählt, und Bestimmen jedes Teils der Teilsymboldaten als Referenzsymboldaten, um eine Vielzahl von Teilen von Referenzsymboldaten zu bestimmen, wobei die Mehrfachbildschirmvorrichtung eine Vielzahl von Anzeigebildschirmen umfasst, wobei ein Teil der Teilsymboldaten verwendet wird, um Symboldaten anzugeben, die einem definierten Anzeigebildschirm der Migrationsvorrichtung entsprechen.

2. Verfahren nach Anspruch 1, wobei, wenn der Vorrichtungstyp der Migrationsvorrichtung eine Einzelbildschirmvorrichtung umfasst und der Vorrichtungstyp der zu migrierenden Vorrichtung eine Mehrfachbildschirmvorrichtung umfasst, oder wenn der Vorrichtungstyp der Migrationsvorrichtung eine Mehrfachbildschirmvorrichtung umfasst und der Vorrichtungstyp der zu migrierenden Vorrichtung eine Einzelbildschirmvorrichtung umfasst, das Berechnen der tatsächlichen Symboldaten basierend auf den Referenzsymboldaten und einem erlangten Symbollayout des ersten Anzeigebildschirms Folgendes umfasst:

Bestimmen (108) eines Symbollayouts eines definierten Anzeigebildschirms der Migrationsvorrichtung basierend auf den Referenzsymboldaten; und

als Reaktion darauf, dass das Symbollayout des ersten Anzeigebildschirms dasselbe ist wie das Symbollayout des definierten Anzeigebildschirms, Verwenden (110) der Referenzsymboldaten des definierten Anzeigebildschirms als die tatsächlichen Symboldaten des ersten Anzeigebildschirms; oder

als Reaktion darauf, dass das Symbollayout des ersten Anzeigebildschirms unterschiedlich zum Symbollayout des definierten Anzeigebildschirms ist, Bestimmen (112) der tatsächlichen Symboldaten des ersten Anzeigebildschirms unter Verwendung eines Symbolzuordnungsalgorithmus und basierend auf den Referenzsymboldaten und dem Symbollayout des ersten Anzeigebildschirms.

3. Verfahren nach Anspruch 2, wobei das Symbollayout der ersten Anzeigeschnittstelle eine zweite Anzahl von Symbolspalten umfasst; und

das Bestimmen der tatsächlichen Symboldaten des ersten Anzeigebildschirms unter Verwendung eines Symbolzuordnungsalgorithmus und basierend auf den Referenzsymboldaten und dem Symbollayout des ersten Anzeigebildschirms Folgendes umfasst:

Bestimmen einer ersten Anzahl von Symbolspalten des definierten Anzeigebildschirms aus dem Symbollayout des definierten Anzeigebildschirms;

Berechnen von Koordinaten jedes Symbols in dem Symbollayout des ersten Anzeigebildschirms unter Verwendung des Symbolzuordnungsalgorithmus und basierend auf der ersten Anzahl von Symbolspalten, der zweiten Anzahl von Symbolspalten und erlangten Koordinaten jedes Symbols in dem Symbollayout des definierten Anzeigebildschirms; und

Verwenden eines Satzes der Koordinaten jedes Symbols als die tatsächlichen Symboldaten des ersten Anzeigebildschirms, um die tatsächlichen Symboldaten mindestens eines ersten Anzeigebildschirms zu bestimmen.

4. Verfahren nach Anspruch 3, wobei die zweite Anzahl von Symbolspalten N Spalten umfasst und die erste Anzahl von Symbolspalten J Spalten umfasst; und

das Berechnen von Koordinaten jedes Symbols in dem Symbollayout des ersten Anzeigebildschirms unter Verwendung des Symbolzuordnungsalgorithmus und basierend auf der ersten Anzahl von Symbolspalten, der zweiten Anzahl von Symbolspalten und erlangten Koordinaten jedes Symbols in dem Symbollayout des definierten Anzeigebildschirms Folgendes umfasst:
unter Verwendung einer Formel für einen Symbolzuordnungsalgorithmus:

$$Y' = ((Y * J) + X) \% N$$

$$X' = ((Y * J) + X) - (Y' * N)$$

Berechnen von Koordinaten jedes Symbols in dem Symbollayout jedes ersten Anzeigebildschirms, wobei X einen X-Achsenkoordinatenwert eines Symbols in dem Symbollayout des definierten Anzeigebildschirms darstellt, Y einen Y-Achsenkoordinatenwert des Symbols in dem Symbollayout des definierten Anzeigebildschirms darstellt, X' einen X-Achsenkoordinatenwert des Symbols in dem Symbollayout des ersten Anzeigebildschirms darstellt und Y' einen Y-Achsenkoordinatenwert des Symbols in dem Symbollayout des ersten Anzeigebildschirms darstellt.

5. Verfahren nach Anspruch 1, wobei, wenn der Vorrichtungstyp der Migrationsvorrichtung eine Mehrfachbildschirmvorrichtung umfasst und der Vorrichtungstyp der zu migrierenden Vorrichtung eine Mehrfachbildschirmvorrichtung umfasst, das Berechnen der tatsächlichen Symboldaten basierend auf den Referenzsymboldaten und einem erlangten Symbollayout des ersten Anzeigebildschirms Folgendes umfasst:

Anzeigen (206) von Eingabeaufforderungsinformationen auf jedem ersten Anzeigebildschirm, wobei die Eingabeaufforderungsinformationen verwendet werden, um einen Benutzer aufzufordern, aus der Vielzahl von Referenzsymboldaten Referenzsymboldaten auszuwählen, die migriert werden müssen;
für jeden ersten Anzeigebildschirm Empfangen (208) eines Auswahlvorgangs des Benutzers und Bestimmen (210) eines Symbollayouts eines definierten Anzeigebildschirms, das den durch den Benutzer ausgewählten Referenzsymboldaten entspricht; und

als Reaktion darauf, dass das Symbollayout des ersten Anzeigebildschirms dasselbe ist wie das Symbollayout des definierten Anzeigebildschirms, Verwenden (212) der Referenzsymboldaten des definierten Anzeigebildschirms als die tatsächlichen Symboldaten des ersten Anzeigebildschirms; oder

als Reaktion darauf, dass das Symbollayout des ersten Anzeigebildschirms unterschiedlich zum Symbollayout des definierten Anzeigebildschirms ist, Bestimmen (214) der tatsächlichen Symboldaten des ersten Anzeigebildschirms unter Verwendung eines Symbolzuordnungsalgorithmus und basierend auf den durch den Benutzer ausgewählten Referenzsymboldaten und dem Symbollayout des ersten Anzeigebildschirms.

6. Verfahren nach Anspruch 5, wobei das Symbollayout des ersten Anzeigebildschirms eine zweite Anzahl von Symbolspalten umfasst; und

das Bestimmen der tatsächlichen Symboldaten des ersten Anzeigebildschirms unter Verwendung eines Symbolzuordnungsalgorithmus und basierend auf den durch den Benutzer ausgewählten Referenzsymboldaten und dem Symbollayout des ersten Anzeigebildschirms Folgendes umfasst:

Bestimmen einer ersten Anzahl von Symbolspalten des definierten Anzeigebildschirms basierend auf dem Symbollayout des definierten Anzeigebildschirms, das den durch den Benutzer ausgewählten Referenzsymboldaten entspricht;

Berechnen von Koordinaten jedes Symbols in dem Symbollayout des ersten Anzeigebildschirms unter Verwendung des Symbolzuordnungsalgorithmus und basierend auf der ersten Anzahl von Symbolspalten, der zweiten Anzahl von Symbolspalten und erlangten Koordinaten jedes Symbols in dem Symbollayout des definierten Anzeigebildschirms; und

Verwenden eines Satzes der Koordinaten jedes Symbols als die tatsächlichen Symboldaten des ersten Anzeigebildschirms, um die tatsächlichen Symboldaten einer Vielzahl von ersten Anzeigebildschirmen zu bestimmen.

7. Elektronische Vorrichtung (900), wobei die elektronische Vorrichtung (900) Folgendes umfasst:

eine Anzeige (970);
einen oder mehrere Prozessoren (910);
einen Speicher (930); und
ein oder mehrere Computerprogramme, wobei das eine oder die mehreren Computerprogramme in dem Speicher (930) gespeichert sind, das eine oder die mehreren Computerprogramme Anweisungen umfassen und, wenn die Anweisungen durch die elektronische Vorrichtung (900) ausgeführt werden, die elektronische Vorrichtung (900) in die Lage versetzt wird, das Symboldatenmigrationsverfahren nach einem der Ansprüche 1 bis 6 durchzuführen.

8. Computerlesbares Speichermedium, wobei das computerlesbare Speichermedium ein gespeichertes Programm umfasst, und wenn das Programm ausgeführt wird, eine Vorrichtung, in der sich das computerlesbare Speichermedium befindet, gesteuert wird, um das Symboldatenmigrationsverfahren nach einem der Ansprüche 1 bis 6 durchzuführen.

**Revendications**

1. Procédé de migration de données d'icônes, appliqué à un dispositif à migrer, dans lequel le dispositif à migrer comprend un premier écran d'affichage, et le procédé comprend :

l'établissement d'un lien entre le dispositif à migrer et un dispositif de migration sur la base d'une demande d'établissement de lien, envoyée par un dispositif de migration,
dans lequel la demande d'établissement de lien transporte un type de dispositif du dispositif de migration, et le type de dispositif comprend un dispositif à écran unique ou un dispositif à écrans multiples ;
l'obtention (104) de données d'icônes de référence du dispositif de migration sur la base d'un type de dispositif du dispositif de migration et d'un type de dispositif du dispositif à migrer ;
le calcul de données d'icônes réelles sur la base des données d'icône de référence et d'une disposition d'icônes obtenue pour le premier écran d'affichage ; et
l'affichage (116, 218) d'une icône correspondant aux données d'icône réelles,
dans lequel l'obtention (104) des données d'icônes de référence du dispositif de migration sur la base d'un type de dispositif du dispositif de migration et d'un type de dispositif du dispositif à migrer comprend :

si le type de dispositif du dispositif de migration comprend un dispositif à écran unique et le type de dispositif du dispositif à migrer comprend un dispositif à écrans multiples, l'obtention de toutes les données d'icônes envoyées par le dispositif de migration et la détermination de toutes les données d'icônes comme données d'icônes de référence, dans lequel le dispositif à écrans multiples comprend une pluralité d'écrans d'affichage,

si le type de dispositif du dispositif de migration comprend un dispositif à écrans multiples et le type de dispositif du dispositif à migrer comprend un dispositif à écran unique, l'obtention de données d'icônes partielles que le dispositif de migration sélectionne pour migrer et la détermination des données d'icônes partielles comme données d'icônes de référence,

dans lequel le dispositif à écrans multiples comprend une pluralité d'écrans d'affichage et les données d'icônes partielles sont utilisées pour indiquer les données d'icônes correspondant à un écran d'affichage spécifique du dispositif de migration, et

si le type de dispositif du dispositif de migration comprend un dispositif à écrans multiples et le type de dispositif du dispositif à migrer comprend un dispositif à écrans multiples, l'obtention (204) d'une pluralité de parties de données d'icônes partielles que le dispositif de migration sélectionne pour migrer et la détermination de chaque partie de données d'icônes partielles comme données d'icônes de référence, pour déterminer une pluralité de parties de données d'icônes de référence, dans lequel le dispositif à écrans multiples comprend une pluralité d'écrans d'affichage, une partie des données d'icônes partielles est utilisée pour indiquer les données d'icônes correspondant à un écran d'affichage spécifique du dispositif de migration.

2. Procédé selon la revendication 1, dans lequel, si le type de dispositif du dispositif de migration comprend un dispositif à écran unique et le type de dispositif du dispositif à migrer comprend un dispositif à écrans multiples, ou si le type de dispositif du dispositif de migration comprend un dispositif à écrans multiples et le type de dispositif du dispositif à migrer comprend un dispositif à écran unique, le calcul des données d'icônes réelles sur la base des données d'icônes de référence et d'une disposition d'icônes obtenue du premier écran d'affichage comprend :

la détermination (108) d'une disposition d'icônes d'un écran d'affichage spécifié du dispositif de migration sur la base des données d'icônes de référence ; et

en réponse au fait que la disposition d'icônes du premier écran d'affichage est identique à celle de l'écran d'affichage spécifié, l'utilisation (110) des données d'icônes de référence de l'écran d'affichage spécifié comme les données d'icônes réelles du premier écran d'affichage ; ou

en réponse au fait que la disposition d'icônes du premier écran d'affichage est différente de la disposition d'icônes de l'écran d'affichage spécifié, la détermination (112) des données d'icônes réelles du premier écran d'affichage à l'aide d'un algorithme de cartographie d'icônes et sur la base des données d'icônes de référence et de la disposition d'icônes du premier écran d'affichage.

3. Procédé selon la revendication 2, dans lequel la disposition des icônes de la première interface d'affichage comprend une seconde quantité de colonnes d'icônes ; et

la détermination des données d'icônes réelles du premier écran d'affichage à l'aide d'un algorithme de cartographie d'icônes et sur la base des données d'icônes de référence et de la disposition d'icônes du premier écran d'affichage comprend :

la détermination d'une première quantité de colonnes d'icônes de l'écran d'affichage spécifié à partir de la disposition d'icônes de l'écran d'affichage spécifié ;

le calcul des coordonnées de chaque icône dans la disposition d'icônes du premier écran d'affichage à l'aide de l'algorithme de cartographie d'icônes et sur la base de la première quantité de colonnes d'icônes, de la seconde quantité de colonnes d'icônes, et des coordonnées obtenues pour chaque icône dans la disposition d'icônes de l'écran d'affichage spécifié ; et

l'utilisation d'un ensemble de coordonnées de chaque icône comme les données d'icônes réelles du premier écran d'affichage, pour déterminer les données d'icônes réelles d'au moins un premier écran d'affichage.

4. Procédé selon la revendication 3, dans lequel la seconde quantité de colonnes d'icônes comprend N colonnes, et la première quantité de colonnes d'icônes comprend J colonnes ; et le calcul des coordonnées de chaque icône dans la disposition d'icônes du premier écran d'affichage à l'aide de l'algorithme de cartographie d'icônes et sur la base de la première quantité de colonnes d'icônes, de la seconde quantité de colonnes d'icônes, et des coordonnées obtenues pour chaque icône dans la disposition d'icônes de l'écran d'affichage spécifié comprend :

à l'aide d'une formule d'algorithme de cartographie d'icônes :

$$Y' = ((Y * J) + X) \% N$$

$$X' = ((Y * J) + X) - (Y' * N)$$

le calcul des coordonnées de chaque icône dans la disposition d'icônes de chaque premier écran d'affichage, dans lequel X représente une valeur de coordonnée sur l'axe X d'une icône dans la disposition d'icônes de l'écran d'affichage spécifié, Y représente une valeur de coordonnée sur l'axe Y de l'icône dans la disposition d'icônes de l'écran d'affichage spécifié, X' représente une valeur de coordonnée sur l'axe X de l'icône dans la disposition d'icônes du premier écran d'affichage et Y' représente une valeur de coordonnée sur l'axe Y de l'icône dans la disposition d'icônes du premier écran d'affichage.

5. Procédé selon la revendication 1, dans lequel si le type de dispositif du dispositif de migration comprend un dispositif à écrans multiples et le type de dispositif du dispositif à migrer comprend un dispositif à écrans multiples, le calcul des données d'icônes réelles sur la base des données d'icônes de référence et d'une disposition d'icônes obtenue du premier écran d'affichage comprend :

l'affichage (206) d'informations d'invite sur chaque premier écran d'affichage, dans lequel les informations d'invite sont utilisées pour inviter un utilisateur à sélectionner, parmi la pluralité de parties de données d'icônes de référence, les données d'icônes de référence à migrer ;
pour chaque premier écran d'affichage, la réception (208) d'une opération de sélection de l'utilisateur et la détermination (210) d'une disposition d'icônes d'un écran d'affichage spécifié correspondant aux données d'icônes de référence sélectionnées par l'utilisateur ; et
en réponse au fait que la disposition d'icônes du premier écran d'affichage est identique à celle de l'écran d'affichage spécifié, l'utilisation (212) des données d'icônes de référence de l'écran d'affichage spécifié comme les données d'icônes réelles du premier écran d'affichage ; ou
en réponse au fait que la disposition d'icônes du premier écran d'affichage est différente de la disposition d'icônes de l'écran d'affichage spécifié, la détermination (214) des données d'icônes réelles du premier écran d'affichage à l'aide d'un algorithme de cartographie d'icônes et sur la base des données d'icônes de référence sélectionnées par l'utilisateur et de la disposition d'icônes du premier écran d'affichage.

6. Procédé selon la revendication 5, dans lequel la disposition d'icônes du premier écran d'affichage comprend une seconde quantité de colonnes d'icônes ; et
la détermination des données d'icônes réelles du premier écran d'affichage à l'aide d'un algorithme de cartographie d'icônes et sur la base des données d'icônes de référence sélectionnées par l'utilisateur et de la disposition d'icônes du premier écran d'affichage comprend :

la détermination d'une première quantité de colonnes d'icônes de l'écran d'affichage spécifié sur la base de la disposition d'icônes de l'écran d'affichage spécifié correspondant aux données d'icônes de référence sélectionnées par l'utilisateur ;
le calcul des coordonnées de chaque icône dans la disposition d'icônes du premier écran d'affichage à l'aide de l'algorithme de cartographie d'icônes et sur la base de la première quantité de colonnes d'icônes, de la seconde quantité de colonnes d'icônes, et des coordonnées obtenues pour chaque icône dans la disposition d'icônes de l'écran d'affichage spécifié ; et
l'utilisation d'un ensemble de coordonnées de chaque icône comme les données d'icônes réelles du premier écran d'affichage, pour déterminer les données d'icônes réelles d'une pluralité de premiers écrans d'affichage.

7. Dispositif électronique (900), dans lequel le dispositif électronique (900) comprend :

un écran (970) ;
un ou plusieurs processeurs (910) ;
une mémoire (930) ; et
un ou plusieurs programmes informatiques, dans lequel les un ou plusieurs programmes informatiques sont stockés dans la mémoire (930), les un ou plusieurs programmes informatiques comprennent des instructions, et lorsque les instructions sont exécutées par le dispositif électronique (900), le dispositif électronique (900) est activé pour effectuer le procédé de migration de données d'icônes selon l'une quelconque des revendications 1 à 6.

**8.** Support de stockage lisible par ordinateur, dans lequel le support de stockage lisible par ordinateur comprend un programme stocké, et lorsque le programme est exécuté, un dispositif dans lequel se trouve le support de stockage lisible par ordinateur est commandé pour réaliser le procédé de migration de données d'icônes selon l'une quelconque des revendications 1 à 6.

100

130

Cloud backup and
storage platform

110

120

First cloud backup
module 1101

Transmission
by using a
Wi-Fi signal

Second cloud backup
module 1201

First cloning module
1102

Second cloning module
1202

Transmission
by using a
device assistant

First backup and recovery
module 1103

Second backup and
recovery module 1203

FIG. 1

110 or 120

| Application |
| --- |

| Operating system |
| --- |

| Communication module | Processor | Memory |
| --- | --- | --- |

| Display device | Input device |
| --- | --- |

FIG. 2

102 — Obtain a link establishment request sent by a migration device

104 — Obtain reference icon data of the migration device based on a device type of the migration device and a device type of a to-be-migrated device after a link is successfully established

106 — Determine an icon layout of a specified display screen based on the reference icon data

108 — Determine whether an icon layout of each first display screen is the same as the icon layout of the specified display screen

No

Yes

110 — Use the reference icon data of the specified display screen as actual icon data of the first display screen

112 — Determine actual icon data of the first display screen by using an icon mapping algorithm and based on the reference icon data and the icon layout of the first display screen

114 — Use a set of coordinates of each icon as the actual icon data of the first display screen, to determine actual icon data of at least one first display screen

116 — Display an icon corresponding to the actual icon data

FIG. 3

2

Please select icon layout data that
needs to be migrated

| Outer screen 4*6 | Inner screen 5*6 |

FIG. 4

FIG. 5

FIG. 6

(a)

(b)

FIG. 7

FIG. 8

(a)                                    (b)

FIG. 9

FIG. 10

(a)  (b)

FIG. 11

FIG. 12a

FIG. 12b

FIG. 13

202 — Obtain a link establishment request sent by a migration device

204 — If a device type of the migration device includes a multi-screen device, and a device type of a to-be-migrated device includes a multi-screen device, obtain a plurality of pieces of partial icon data that the migration device selects to migrate, and determine each piece of partial icon data as reference icon data, to determine a plurality of pieces of reference icon data

206 — Display prompt information on each first display screen, where the prompt information is used to prompt a user to select, from the plurality of pieces of reference icon data, reference icon data that needs to be migrated

208 — For each first display screen, receive a selection operation of the user, and determine an icon layout of a specified display screen corresponding to the reference icon data selected by the user

210 — Determine whether an icon layout of each first display screen is the same as the icon layout of the specified display screen

No

Yes

212 — Use the reference icon data of the specified display screen as actual icon data of the first display screen

214 — Determine actual icon data of the first display screen by using an icon mapping algorithm and based on the reference icon data selected by the user and the icon layout of the first display screen

216 — Use a set of coordinates of each icon as the actual icon data of the first display screen, to determine actual icon data of a plurality of first display screens

218 — Display an icon corresponding to the actual icon data

FIG. 14

FIG. 15

FIG. 16

110

(a)

(b)

FIG. 17

FIG. 18a

FIG. 18b

EP 4 206 911 B1

FIG. 19

FIG. 20

45

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2014203999 A
- US 2013339833 A1